# EUROPEAN PATENT SPECIFICATION

(11) **EP 3 340 406 B1**
(45) Date of publication and mention of the grant of the patent: **23.02.2022**
(21) Application number: 15901688.0
(22) Date of filing: 18.08.2015
(51) Int. Cl.: H02B 3/00, G05B 19/042

(54) **DISPLAY CONTROL SYSTEM AND CONTROL CENTER USING SAME**
ANZEIGESTEUERUNGSSYSTEM UND STEUERZENTRALE DAMIT
SYSTÈME DE COMMANDE D'AFFICHAGE ET CENTRE DE COMMANDE L'UTILISANT

(43) Date of publication of application: 27.06.2018
(73) Proprietor: Mitsubishi Electric Corporation, Chiyoda-ku Tokyo 100-8310 (JP)
(72) Inventor: MIYAUCHI Toshihiko, Tokyo 100-8310 (JP)
(74) Representative: Sajda, Wolf E.
(86) International application number: PCT/JP2015/073091
(87) International publication number: WO 2017/029706

(56) References cited:
- EP-A1- 2 854 416
- WO-A1-2009/101716
- JP-A- H05 300 613
- JP-A- 2001 211 515
- JP-A- 2001 325 003
- JP-A- 2007 265 767
- JP-A- 2012 003 990
- JP-A- 2012 110 229
- JP-A- 2014 228 188
- None

## Description

### Technical Field

The present invention relates to a display control system that displays information of a measurement device of an inspection object and a control center using the same in a control center where a plurality of row panels, in which measurement devices that perform operation control of, for example, electric motors are arranged in a plurality of columns and a plurality of rows, are arranged in an electrical room.

### Background Art

In the case of a large-scale control center, the number of rows of the control center arranged in an electrical room is large and, for example, approximately six columns of measurement units each constituted by a measurement device or the like are unitized to constitute one panel; and, for example, five rows are juxtaposed to constitute one row panel and these row panels are arrayed in plurality.

In the control center in which these row panels are arrayed in plurality in the electrical room, a maintenance worker confirms every day while going round in sequence that there is no abnormality in a measured value and/or an operation state of each measurement device arranged in each measurement unit.

The measurement device of each measurement unit is mounted with a light emitting diode (LED) and a liquid crystal display (LCD) and is provided with a measurement device display control block composed of a measurement device display block that displays the measured value and/or the operation state and a measurement device operation block.

Furthermore, each measurement unit is attached with a load nameplate on which the name of a load is written; and the maintenance worker can confirm as to what is the load of each measurement unit from the load nameplate. However, there is no way of knowing at which position in the electrical room a measurement device of an inspection object to be specified is located; and accordingly, it's necessary to find the position of the measurement device of the inspection object while searching in the electrical room.

Moreover, each measurement unit is attached with the load nameplate on which the name of the load is written; and the maintenance worker can confirm as to what is the load of each measurement unit from the load nameplate. However, in order to individually confirm in detail that the measurement device of the inspection object is for which and what load (facility), documents such as drawings have to be referred in each case.

Patent Document 2 discloses a monitor and control system, which monitors a state of a load and controls the load by collecting state information on the load such as a motor in the field to be controlled and monitored by a transmission master station provided in a first room such as a monitor and control room, a transmission slave station provided in a second room such as an electric room and a transmission slave station provided in a control panel such as a control panel in the field provided in the vicinity of the load to be controlled and monitored. Patent Document 3 discloses a programmable logic controller 10, which links positional-information of the server 1 and the electric power measurement means 8.

### Prior Art Document

### Patent Document

Patent Document 1: JP H5(1993)-300 613 A
Patent Document 2: EP 2 854 416 A1
Patent Document 3: JP 2014 228188 A

### Summary of the Invention

### Problems to be Solved by the Invention

As the aforementioned conventional display control system, a measurement unit to be targeted for operation and confirmation needs to be searched from many measurement units in the case of operating and confirming the specific measurement unit. It takes time for the maintenance worker to move and search and it becomes a cause of an increase in maintenance cost.

Furthermore, the measurement device of the measurement unit has the measurement device display block for inspection and maintenance and it causes an increase in cost at the thought of cost in the whole panels. Further, a problem exists in that the LED and the LCD for use in the measurement device display block need to be periodically replaced and it also becomes an increase in maintenance cost during replacement.

Moreover, in the aforementioned conventional one, in the case of operating and confirming the measurement device of the inspection object to be specified, the position of the measurement device of the inspection object of the unit to be targeted for operation and confirmation needs to be searched from many units arranged in the electrical room and a lot of time is needed to reach in front of the measurement device of the unit of the inspection object. A problem exists in that it takes time for the maintenance worker to move and search and it becomes an increase in maintenance cost. In addition, a problem exists in that it is not clear at which electrical room the maintenance worker is located.

Besides, as the aforementioned conventional information display system for panel equipment, since documents such as drawings have to be referred in each case in order to individually confirm in detail that the measurement device of the inspection object is for which and what load (facility), a problem exists in that reading comprehension ability that reads drawings is also needed, it takes time for confirmation, it becomes a burden on the maintenance work, it takes time for the maintenance work, and it becomes an increase in maintenance cost. In addition, a problem exists in that it cannot be immediately confirmed that the measurement device in which an abnormality is detected during inspection is for which and what load facility.

The present invention has been made to solve the above described problem, and an object of the present invention is to provide a display control system which can achieve a reduction in cost.

Furthermore, the present invention has been made to solve the above described problem, and an object of the present invention is to provide a specific position navigation system which navigates to the position of a measurement device of a measurement unit to be targeted.

Moreover, the present invention has been made to solve the above described problem, and an object of the present invention is to provide an information display system for panel equipment which can confirm detail information of a measurement device of a measurement unit to be targeted.

### Means for Solving the Problem

The present invention provides a solution to the above mentioned problems according to the independent claims. Preferred embodiments are provided by the dependent claims. The embodiments 2 24 of the following description are not covered by the claims and thus, do not form part of the present invention. They are provided for illustrative purpose only and are only intended to assist the reader in understanding the present invention.

Furthermore, according to the present invention, there is provided a display control system including: measurement units which are arrayed in plurality and each of which has a measurement device on which a measurement device display unit is not mounted; a display control unit which is provided on any one of the measurement units, is connected through a line to each of the measurement units, and executes collection of each operation state and each control command of the measurement units; a radio communication unit mounted on the display control unit; and a monitoring control unit which performs radio communication with the radio communication unit, has a terminal display block and a terminal operation block, and executes confirmation of each operation state and each control command of the measurement units.

Moreover, according to the present invention, there is provided a display control system including: measurement units which are arrayed in plurality and each of which has a measurement device on which a measurement device display unit is not mounted; radio communication units each provided on the measurement device of the measurement unit; and a monitoring control unit which performs radio communication with the radio communication units, has a terminal display block and a terminal operation block, and executes confirmation of each operation state and each control command of the measurement units.

Additionally, according to the present invention, there is provided a display control system including: measurement units which are arrayed in plurality and each of which has a measurement device on which a measurement device display unit is not mounted; a display control unit which is provided on any one of the measurement units, is connected through a line to each of the measurement units, and executes collection of each operation state and each control command of the measurement units; a radio communication unit mounted on the display control unit; a network circuit connected through a line to the radio communication unit; and a monitoring control unit which performs radio communication with the network circuit, has a terminal display block and a terminal operation block, and executes confirmation of each operation state and each control command of the measurement units.

In addition, according to the present invention, there is provided a specific position navigation system including: radio communication terminal devices which are located in an electrical room in which measurement units each constituted by a load nameplate and a measurement device are arrayed in plurality, and are arranged in the electrical room; and a radio communication terminal unit which specifies a position by performing radio communication to the radio communication terminal devices, has a terminal display block and a terminal operation block, and has a terminal radio communication portion. In the specific position navigation system, radio communication of information of the targeted measurement device is performed from the terminal radio communication portion of the radio communication terminal unit to the radio communication terminal devices to display a route to the measurement device to be targeted on the terminal display block of the radio communication terminal unit.

Furthermore, according to the present invention, there is provided an information display system for panel equipment, including: measurement units which are arrayed in plurality, and each of which is constituted by a load nameplate and a measurement device and has a radio communication block; and a radio communication terminal unit which has a terminal display block and a terminal operation block, and has a terminal radio communication portion. In the information display system for panel equipment, radio communication of the targeted measurement device is performed from the terminal radio communication portion of the radio communication terminal unit to the radio communication block of the measurement device to display information of the measurement device on the terminal display block of the radio communication terminal unit.

Moreover, according to the present invention, there is provided an information display system for panel equipment, including: measurement units which are arrayed in plurality, and each of which is constituted by a load nameplate and a measurement device and has a radio communication block; a radio communication terminal unit which has a terminal display block and a terminal operation block, and has a terminal radio communication portion; and an operation button provided on the measurement device. In the information display system for panel equipment, radio communication of information of the measurement device is performed by a command of the operation button of the targeted measurement device from the radio communication block of the

### Advantageous Effect of the Invention

According to the display control system according to the present invention, the measurement device display unit is configured not to be mounted on each measurement device of the plurality of arrayed measurement units, and the display control unit that is connected through a line to each of the respective measurement units is provided on any one of the measurement units, whereby the display control system capable of achieving a reduction in cost can be obtained.

Furthermore, according to the display control system according to the present invention, the measurement device display unit is configured not to be mounted on each measurement device of the plurality of arrayed measurement units, and there includes: the display control unit which is provided on any one of the measurement units, and is connected through a line to each of the respective measurement units; the radio communication unit mounted on the display control unit; and the monitoring control unit which performs radio communication with the radio communication unit, has the terminal display block and the terminal operation block, and executes confirmation of each operation state and each control command of the respective measurement units, whereby the display control system capable of achieving a reduction in cost can be obtained.

Moreover, according to the display control system according to the present invention, the measurement device display unit is configured not to be mounted on each measurement device of the plurality of arrayed measurement units, and there includes: the radio communication units each provided on the measurement device of the measurement unit; and the monitoring control unit which performs radio communication with the radio communication units, has the terminal display block and the terminal operation block, and executes confirmation of each operation state and each control command of the respective measurement units, whereby the display control system capable of achieving a reduction in cost can be obtained.

Additionally, according to the display control system according to the present invention, the measurement device display unit is configured not to be mounted on each measurement device of the plurality of arrayed measurement units, and there includes: the display control unit that is connected through a line to each of the respective measurement units is provided on any one of the measurement units; the radio communication unit mounted on the display control unit; the network circuit connected through a line to the radio communication unit; and the monitoring control unit which performs radio communication with the network circuit, has the terminal display block and the terminal operation block, and executes confirmation of each operation state and each control command of the respective measurement units, whereby the display control system capable of achieving a reduction in cost can be obtained.

Furthermore, according to the specific position navigation system according to the present invention, the position of the radio communication terminal unit is specified, whereby the specific position navigation system capable of navigating the rout to the position of the measurement device of the measurement unit to be targeted can be obtained.

Moreover, according to the information display system for panel equipment according to the present invention, the information display system for panel equipment capable of confirming detail information of the measurement device of the measurement unit to be targeted can be obtained.

### Brief Description of the Drawings

- FIG. 1: is a plan view showing a control center in a display control system according to Embodiment 1 of the present invention;
- FIG. 2: is a perspective view showing the display control system according to Embodiment 1 of the present invention;
- FIG. 3: is a relevant part front view showing a circuit state in the display control system according to Embodiment 1 of the present invention;
- FIG. 4: is a perspective view showing the circuit state in the display control system according to Embodiment 1 of the present invention;
- FIG. 5: is a front view showing a display control unit in the display control system according to Embodiment 1 of the present invention;
- FIG. 6: is a front view showing the display control unit in the display control system according to Embodiment 1 of the present invention;
- FIG. 7: is a front view showing the display control unit in the display
- FIG. 8: control system according to Embodiment 1 of the present invention; is a relevant part front view showing a circuit state in a display control system according to Embodiment 2 of the present invention;
- FIG. 9: is a perspective view showing the circuit state in the display control system according to Embodiment 2 of the present invention;
- FIG. 10: is a relevant part front view showing a circuit state in a display control system according to Embodiment 3 of the present invention;
- FIG. 11: is a perspective view showing the circuit state in the display control system according to Embodiment 3 of the present invention;
- FIG. 12: is a front view showing a monitoring control unit in the display control system according to Embodiment 3 of the present invention;
- FIG. 13: is a front view showing the monitoring control unit in the display control system according to Embodiment 3 of the present invention;
- FIG. 14: is a front view showing the monitoring control unit in the display control system according to Embodiment 3 of the present invention;
- FIG. 15: is a relevant part front view showing a circuit state in a display control system according to Embodiment 4 of the present invention;
- FIG. 16: is a perspective view showing the circuit state in the display control system according to Embodiment 4 of the present invention;
- FIG. 17: is a relevant part front view showing a circuit state in a display control system according to Embodiment 5 of the present invention;
- FIG. 18: is a perspective view showing the circuit state in the display control system according to Embodiment 5 of the present invention;
- FIG. 19: is a relevant part front view showing a circuit state in a display control system according to Embodiment 6 of the present invention;
- FIG. 20: is a perspective view showing the circuit state in the display control system according to Embodiment 6 of the present invention;
- FIG. 21: is a relevant part front view showing a circuit state in a display control system according to Embodiment 7 of the present invention;
- FIG. 22: is a perspective view showing the circuit state in the display control system according to Embodiment 7 of the present invention;
- FIG. 23: is a relevant part front view showing a circuit state in a display control system according to Embodiment 8 of the present invention;
- FIG. 24: is a perspective view showing the circuit state in the display control system according to Embodiment 8 of the present invention;
- FIG. 25: is a relevant part front view showing a circuit state in a display control system according to Embodiment 9 of the present invention;
- FIG. 26: is a perspective view showing the circuit state in the display control
- FIG. 27: system according to Embodiment 9 of the present invention; is a relevant part front view showing a circuit state in a display control system according to Embodiment 10 of the present invention;
- FIG. 28: is a perspective view showing the circuit state in the display control system according to Embodiment 10 of the present invention;
- FIG. 29: is a relevant part front view showing a circuit state in a display control system according to Embodiment 11 of the present invention;
- FIG. 30: is a perspective view showing the circuit state in the display control system according to Embodiment 11 of the present invention;
- FIG. 31: is a relevant part front view showing a circuit state in a display control system according to Embodiment 12 of the present invention;
- FIG. 32: is a perspective view showing the circuit state in the display control system according to Embodiment 12 of the present invention;
- FIG. 33: is a plan view showing a control center in a specific position navigation system according to Embodiment 13 of the present invention;
- FIG. 34: is a perspective view showing the control center in the specific position navigation system according to Embodiment 13 of the present invention;
- FIG. 35: is a perspective view showing the specific position navigation system according to Embodiment 13 of the present invention;
- FIG. 36: is a perspective view showing the specific position navigation system according to Embodiment 13 of the present invention;
- FIG. 37: is a front view showing the measurement device of the control center according to Embodiment 13 of the present invention;
- FIG. 38: is a plan view showing a control center in a specific position navigation system according to Embodiment 14 of the present invention;
- FIG. 39: is a relevant part perspective view showing a row panel in the specific position navigation system according to Embodiment 14 of the present invention;
- FIG. 40: is a perspective view showing the specific position navigation system according to Embodiment 14 of the present invention;
- FIG. 41: is a perspective view showing the specific position navigation system according to Embodiment 14 of the present invention;
- FIG. 42: is a perspective view showing a specific position navigation system according to Embodiment 15 of the present invention;
- FIG. 43: is a perspective view showing a specific position navigation system according to Embodiment 16 of the present invention;
- FIG. 44: is a front view showing a two-dimensional code in the specific position navigation system according to Embodiment 16 of the present invention;
- FIG. 45: is a perspective view showing a specific position navigation system according to Embodiment 17 of the present invention;
- FIG. 46: is a perspective view showing the specific position navigation system according to Embodiment 17 of the present invention;
- FIG. 47: is a plan view showing a control center in a specific position navigation system according to Embodiment 18 of the present invention;
- FIG. 48: is a perspective view showing a management center in the specific position navigation system according to Embodiment 18 of the present invention;
- FIG. 49: is a perspective view showing a display device of the management center in the specific position navigation system according to Embodiment 18 of the present invention;
- FIG. 50: is a plan view showing a control center in a specific position navigation system according to Embodiment 19 of the present invention;
- FIG. 51: is a perspective view showing a display device of a management center in the specific position navigation system according to Embodiment 19 of the present invention;
- FIG. 52: is a plan view showing a control center in an information display system for panel equipment according to Embodiment 20 of the present invention;
- FIG. 53: is a perspective view showing the information display system for panel equipment according to Embodiment 20 of the present invention;
- FIG. 54: is a relevant part perspective view showing the information display system for panel equipment according to Embodiment 20 of the present invention;
- FIG. 55: is a perspective view showing a radio communication terminal unit in the information display system for panel equipment according to Embodiment 20 of the present invention;
- FIG. 56: is a perspective view showing the radio communication terminal unit in the information display system for panel equipment according to Embodiment 20 of the present invention;
- FIG. 57: is a perspective view showing the radio communication terminal unit in the information display system for panel equipment according to Embodiment 20 of the present invention;
- FIG. 58: is a perspective view showing the radio communication terminal unit in the information display system for panel equipment according to Embodiment 20 of the present invention;
- FIG. 59: is a front view showing a measurement device in the information display system for panel equipment according to Embodiment 20 of the present invention;
- FIG. 60: is a relevant part perspective view showing an information display system for panel equipment according to Embodiment 21 of the present invention;
- FIG. 61: is a relevant part perspective view showing an information display system for panel equipment according to Embodiment 22 of the present invention;
- FIG. 62: is a front view showing an information display system for panel equipment according to Embodiment 23 of the present invention; and
- FIG. 63: is a front view showing an information display system for panel equipment according to Embodiment 24 of the present invention.

### Mode for Carrying Out the Invention

### Embodiment 1

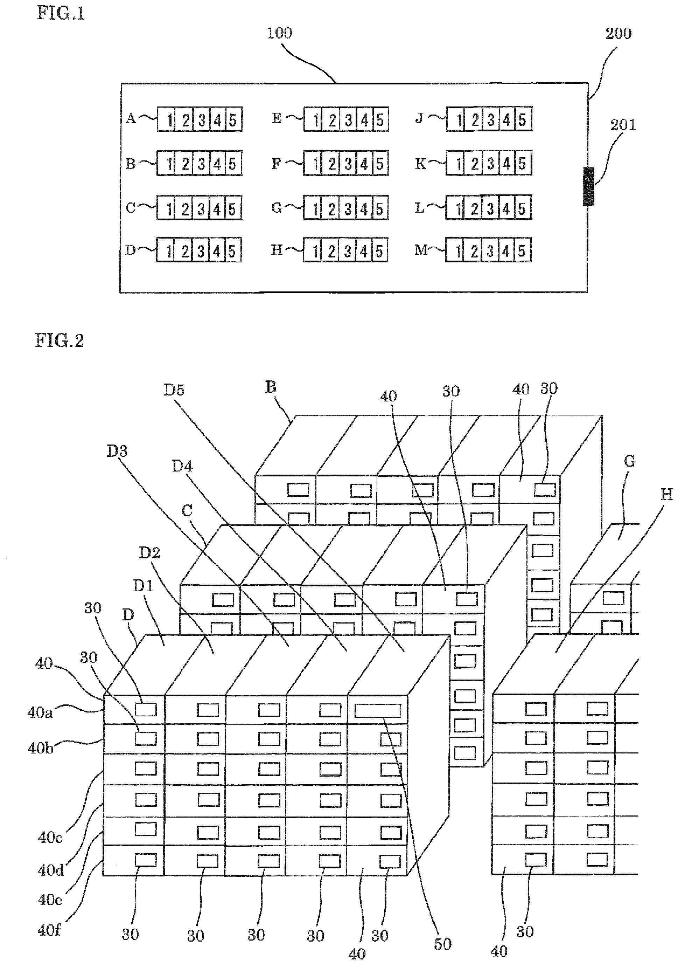

Hereinafter, Embodiment 1 of the present invention will be described on the basis of FIG. 1 to FIG. 7. Then, in each of the drawings, identical or equivalent members and portions will be described with the same reference numerals (and letters) assigned thereto. FIG. 1 is a plan view showing a control center in a display control system according to Embodiment 1 of the present invention. FIG. 2 is a perspective view showing the display control system according to Embodiment 1 of the present invention.

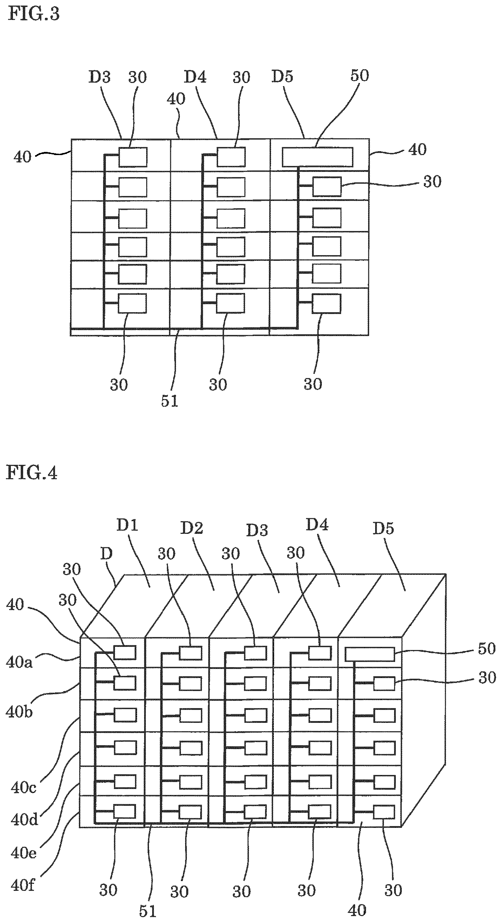

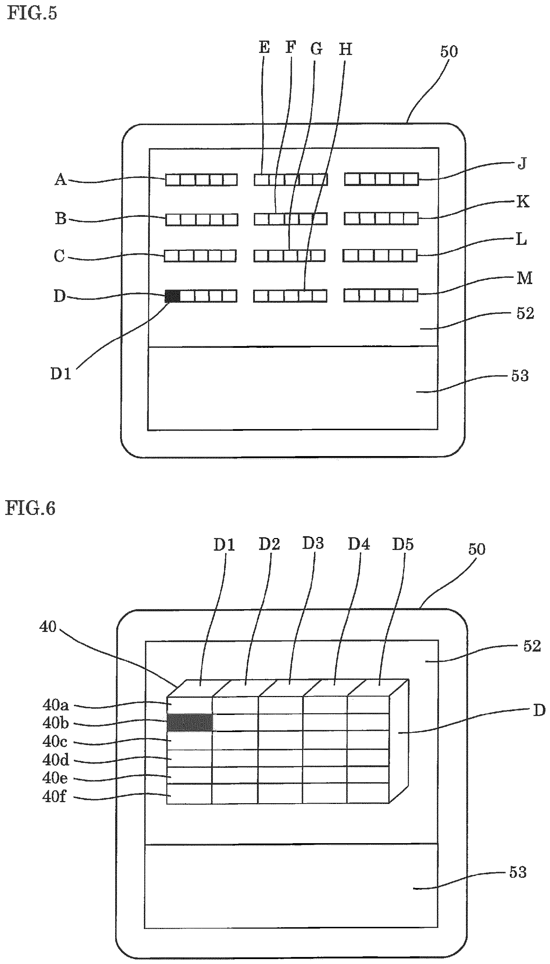

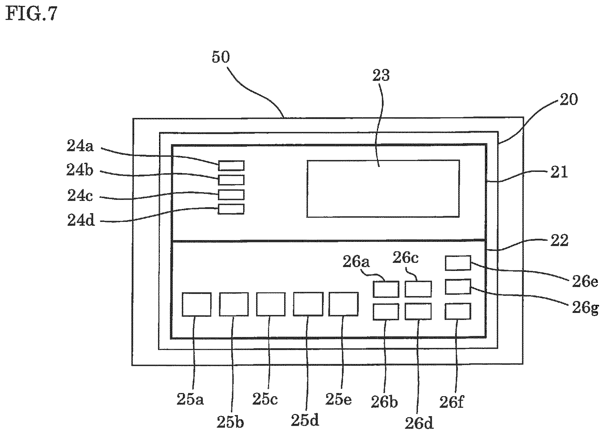

FIG. 3 is a relevant part front view showing a circuit state in the display control system according to Embodiment 1 of the present invention. FIG. 4 is a perspective view showing the circuit state in the display control system according to Embodiment 1 of the present invention. FIG. 5 is a front view showing a display control unit in the display control system according to Embodiment 1 of the present invention. FIG. 6 is a front view showing the display control unit in the display control system according to Embodiment 1 of the present invention. FIG. 7 is a front view showing the display control unit in the display control system according to Embodiment 1 of the present invention.

FIG. 1 shows a case where a control center 100 is arranged in an electrical room 200; and FIG. 2 shows the display control system. In the control center 100, for example, six columns of measurement units each having a measurement device on which a measurement device display unit is not mounted, are arranged and unitized to constitute one panel; and, for example, five rows of the panels are juxtaposed to constitute one row panel and these row panels are arrayed in plurality.

More specifically, by way of an example, the drawing shows the case where row panels from a row panel A to a row panel M are arranged. In the case of inspecting and maintaining the control center 100 arranged in the electrical room 200, the inspection and the maintenance are performed by opening a door 201 and by entering the room.

For example, in the row panel D, six columns of measurement units 40, for example, from a measurement unit 40a to a measurement unit 40f, each having a measurement device 30 on which the measurement device display unit is not mounted, are arranged and unitized to constitute one panel; and, for example, five rows of these panels from the panel D1 to the panel D5, are juxtaposed to constitute one row panel D.

For example, other row panels from the row panel A to the row panel C and from the row panel E to the row panel M, are also similarly configured such that, for example, six columns of the measurement units 40 each having the measurement device 30 on which the measurement device display unit is not mounted, are arranged and unitized to constitute one panel; and, for example, five rows of these panels are juxtaposed to constitute one row panel, respectively. Incidentally, there is shown a case where the measurement device 30 is not mounted with the measurement device display unit, but is mounted with a measurement device control unit.

In the control center 100 in which these row panels from the row panel A to the row panel M are arrayed in plurality in the electrical room 200, there includes a display control unit 50 which is provided on any one of the respective measurement units 40, is connected through a line by a wired circuit network 51 to each measurement device 30 of each measurement unit 40 (the measurement device 30 is not mounted with the measurement device display unit), and has a display unit 52 that displays each operation state of each measurement unit 40 and a control unit 53 that executes a control command to each of the respective measurement units 40.

There is shown a case where the display control unit 50 is provided on any one of the respective measurement units 40 in, for example, the row panel D of the row panels from the row panel A to the row panel M in the control center 100. More specifically, there is shown the case where the display control unit 50 is provided on the measurement unit 40 of the uppermost column of the panel D5 of the row panel D.

In this Embodiment 1, there is shown the case where the display control unit 50 is connected through the line by the wired circuit network 51 to each measurement unit 40 of the row panels from the row panel A to the row panel M in the control center 100.

A maintenance worker needs to confirm every day that there is no abnormality in a measured value and/or an operation state of each measurement device 30 on which the measurement device display unit is not mounted, each measurement device 30 being arranged in each measurement unit 40 of the row panels from the row panel A to the row panel M in a control center 100.

The measured value and/or the operation state of each measurement device 30 on which the measurement device display unit is not mounted can be confirmed by the display control unit 50 arranged in, for example, the measurement unit 40 of the uppermost column of the panel D5 of the row panel D. The display control unit 50 has a screen configuration like the one shown in FIG. 5 to FIG. 7. The display control unit 50 has the display unit 52 that displays each operation state of the respective measurement units 40 and the control unit 53 that executes the control command to each of the respective measurement units 40; and as shown in FIG. 5, an array from the row panel A to the row panel M of the control center 100 is displayed by the display unit 52 of the display control unit 50.

Then, when the maintenance worker confirms by the display unit 52 of the display control unit 50 that an abnormality occurs in the measured value and/or the operation state of the measurement device 30 on which the measurement device display unit is not mounted, the measurement device 30 being arranged in the measurement unit 40 of the panel D1 of the row panel D, it is possible to confirm that the abnormality occurs in the measurement unit 40b of the second column from the top of the panel D1 of the row panel D by operating the control unit 53 of the display control unit 50 as shown in FIG. 6.

After confirming that the abnormality occurs in the measurement unit 40b of the second column from the top of the panel D1 of the row panel D, a screen of a measurement device display control block 20 that is similar to the measurement device display unit and the measurement device control unit of the measurement unit 40b is displayed on the display unit 52 of the display control unit 50 as shown in FIG. 7 by operating the control unit 53 of the display control unit 50.

More specifically, since the measurement device display unit is displayed on the display unit 52 of the display control unit 50, the measurement device display unit is not mounted on each measurement device 30 of each measurement unit 40. The measurement device display unit is not mounted on each measurement device 30 of each measurement unit 40, whereby a considerable reduction in cost can be achieved.

An example of the measurement device display block 21 and the measurement device operation block 22 of the measurement device display control block 20 displayed on the display unit 52 of the display control unit 50 will be described on the basis of FIG. 7. The measurement device display block 21 of the measurement device display control block 20 is provided with a liquid crystal display 23 that displays a wide variety of numerical values and LED indication lamps from an LED indication lamp 24a to an LED indication lamp 24d. For example, the LED indication lamp 24a displays ON; the LED indication lamp 24b, OFF; the LED indication lamp 24c, FAULT; and the LED indication lamp 24d, ERROR, respectively.

Furthermore, the measurement device operation block 22 of the measurement device display control block 20 is provided with, for example, a direct control button block 25a, a remote control button 25b, a stop button 25c, a reverse rotation button 25d, a normal rotation button 25e, a MODE button 26a, a SET button 26b, an up button 26c, a down button 26d, a CLEAR/BACK button 26e, a RESET button 26f, and an external apparatus connection terminal 26g.

Therefore, for example, when the LED indication lamp 24d is lighted and displays ERROR, inspection and maintenance can be performed so that an error numerical value displayed on the liquid crystal display 23 becomes a normal value by operating the direct control button block 25a, the remote control button 25b, the stop button 25c, the reverse rotation button 25d, the normal rotation button 25e, the MODE button 26a, the SET button 26b, the up button 26c, the down button 26d, the CLEAR/BACK button 26e, the RESET button 26f, the external apparatus connection terminal 26g, and the like which are provided on the measurement device operation block 22 of the measurement device display control block 20.

As described above, according to the display control system in this Embodiment 1, the measurement device display unit is configured not to be mounted on each measurement device 30 of the plurality of arrayed measurement units 40, and the display control unit 50 that is connected through the line to each of the respective measurement units 40 is provided on any one of the measurement units 40, whereby the display control system capable of achieving a considerable reduction in cost can be obtained.

Furthermore, since the measurement device 30 of the measurement unit 40 to be targeted can be searched by the display control unit 50, inspection and maintenance of the measurement device 30 of the measurement unit 40 to be targeted can be performed while making the round from the row panel A to the row panel M in the control center 100 without performing inspection and maintenance and the time required for daily inspection work of the maintenance worker can be considerably reduced.

By the way, the inspection and the maintenance of the measurement device 30 of the measurement unit 40 to be targeted are performed by searching the measurement device 30 of the measurement unit 40 to be targeted by the display control unit 50 and by operating by the control unit 53 of the display control unit 50, but are not limited thereto; and after searching the measurement device 30 of the measurement unit 40 to be targeted by the display control unit 50, the inspection and the maintenance of the measurement device 30 of the measurement unit 40 to be targeted may be performed by going in front of the measurement device 30 of the measurement unit 40 to be targeted and by operating the measurement device control unit of the measurement device 30.

Furthermore, there has been described the case where the display control unit 50 is provided on any one of the respective measurement units 40 in, for example, the row panel D of the row panels from the row panel A to the row panel M in the control center 100, but is not limited to this; and the display control unit 50 may be provided on each row panel and the same effects as the aforementioned Embodiment 1 can be exhibited.

### Embodiment 2

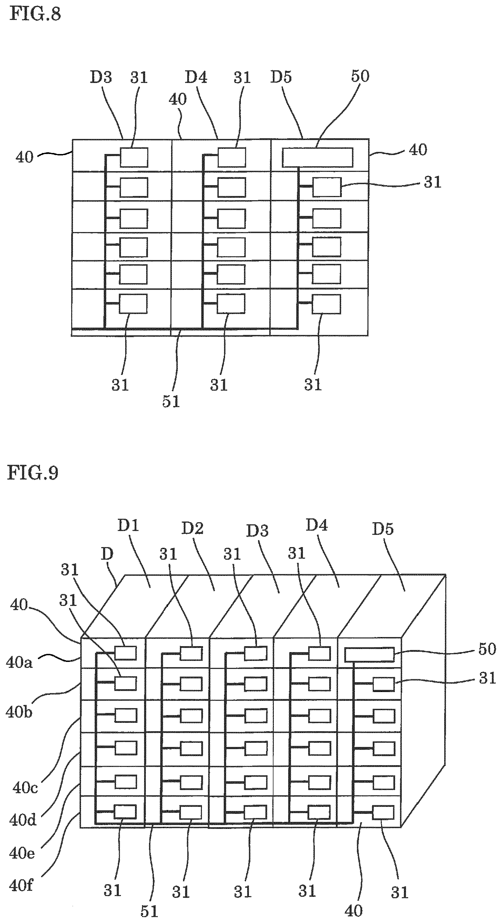

Embodiment 2 of the present invention will be described on the basis of FIG. 8 and FIG. 9. Then, in each of the drawings, identical or equivalent members and portions will be described with the same reference numerals (and letters) assigned thereto. FIG. 8 is a relevant part front view showing a circuit state in a display control system according to Embodiment 2 of the present invention. FIG. 9 is a perspective view showing the circuit state in the display control system according to Embodiment 2 of the present invention.

In the aforementioned Embodiment 1, there has been described a case where the measurement device display unit is not mounted on each measurement device 30 of each measurement unit 40, but the measurement device control unit is mounted. However, in this Embodiment 2, a measurement device display unit and a measurement device control unit are configured not to be mounted on each measurement device 31 of each measurement unit 40.

When a maintenance worker confirms by a display unit 52 of a display control unit 50 that an abnormality occurs in a measured value and/or an operation state of the measurement device 31 on which the measurement device display unit and the measurement device control unit are not mounted, the measurement device 31 being arranged in the measurement unit 40 of a panel D1 of a row panel D, inspection and maintenance of the measurement device 31 of the measurement unit 40 to be targeted can be performed by operating a control unit 53 of the display control unit 50 as in the aforementioned Embodiment 1 and the time required for daily inspection work of the maintenance worker can be considerably reduced.

According to this Embodiment 2, since the measurement device display unit and the measurement device control unit are configured not to be mounted on each measurement device 31 of each measurement units 40, a reduction in cost can be further achieved than the aforementioned Embodiment 1.

### Embodiment 3

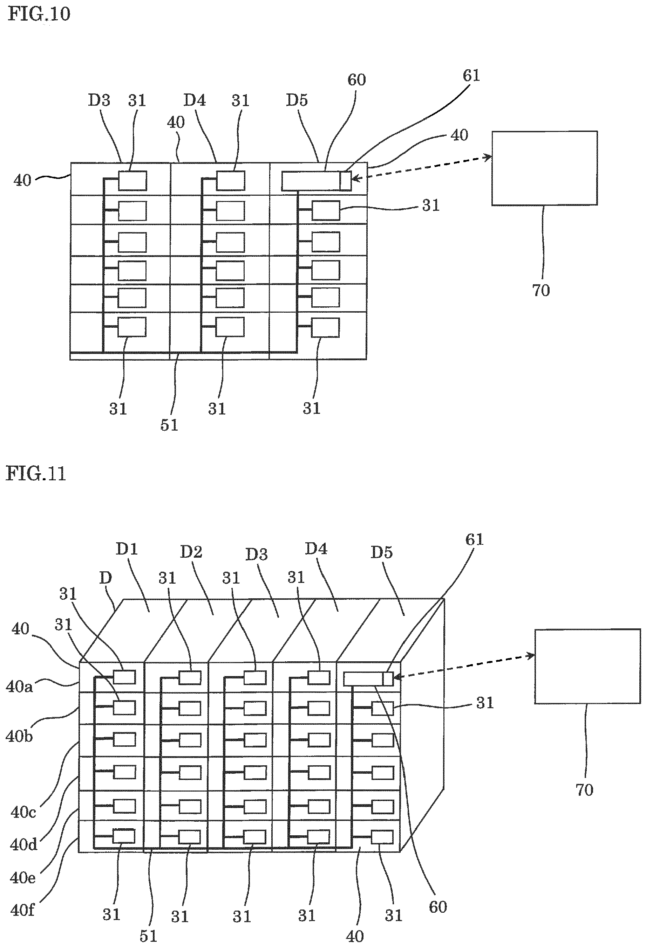

Embodiment 3 of the present invention will be described on the basis of FIG. 10 to FIG. 14. Then, in each of the drawings, identical or equivalent members and portions will be described with the same reference numerals (and letters) assigned thereto. FIG. 10 is a relevant part front view showing a circuit state in a display control system according to Embodiment 3 of the present invention. FIG. 11 is a perspective view showing the circuit state in the display control system according to Embodiment 3 of the present invention.

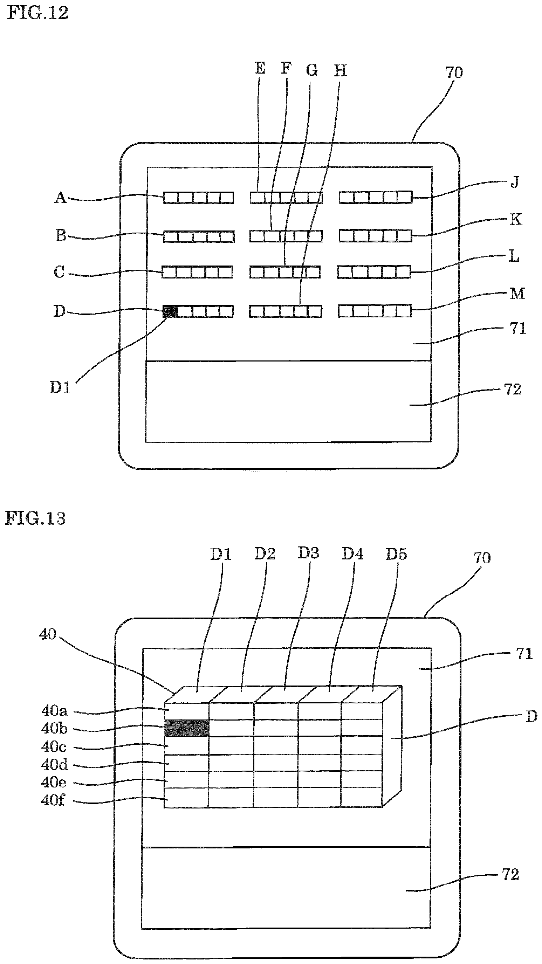

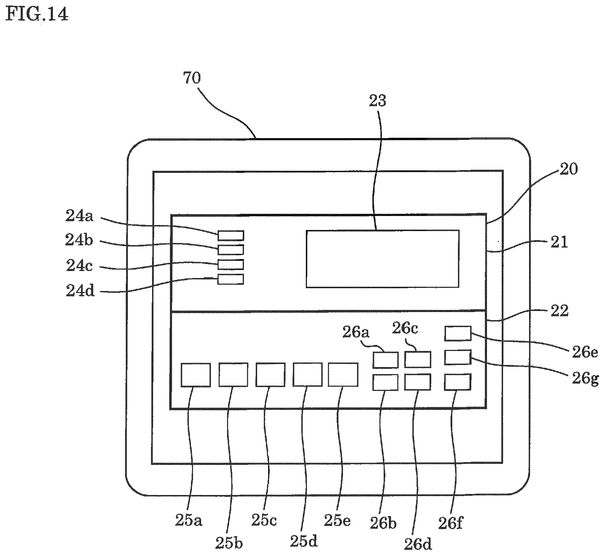

FIG. 12 is a front view showing a monitoring control unit in the display control system according to Embodiment 3 of the present invention. FIG. 13 is a front view showing the monitoring control unit in the display control system according to Embodiment 3 of the present invention. FIG. 14 is a front view showing the monitoring control unit in the display control system according to Embodiment 3 of the present invention.

In a control center 100 in which row panels from a row panel A to a row panel M are arrayed in plurality in an electrical room 200, there includes a display control unit 60 which is provided on any one of respective measurement units 40, is connected through a line by a wired circuit network 51 to each measurement device 31 of each measurement unit 40 (the measurement device 31 is not mounted with a measurement device display unit and a measurement device control unit), and executes collection of each operation state and each control command of the respective measurement units 40.

The display control unit 60 is mounted with a radio communication unit 61. There is shown a case where the display control unit 60 is provided on any one of the respective measurement units 40 in, for example, a row panel D of the row panels from the row panel A to the row panel M in the control center 100. More specifically, there is shown the case where the display control unit 60 is provided on the measurement unit 40 of the uppermost column of a panel D5 of the row panel D.

In this Embodiment 3, there is shown the case where the display control unit 60 is connected through the line by the wired circuit network 51 to each measurement unit 40 of the row panels from the row panel A to the row panel M in the control center 100.

There includes a monitoring control unit 70 which performs radio communication with the radio communication unit 61 mounted on the display control unit 60 as shown by a dotted line arrow, has a terminal display block 71 and a terminal operation block 72, and executes confirmation of each operation state and each control command of the respective measurement units 40. The monitoring control unit 70 is arranged in a management room near the control center 100 within a range capable of performing radio communication with, for example, the radio communication unit 61.

A maintenance worker needs to confirm every day that there is no abnormality in a measured value and/or an operation state of each measurement device 31 on which the measurement device display unit and the measurement device control unit are not mounted, each measurement device 31 being arranged in each measurement unit 40 of the row panels from the row panel A to the row panel M in the control center 100.

The measured value and/or the operation state of each measurement device 31 on which the measurement device display unit and the measurement device control unit are not mounted is confirmed by performing radio communication as shown by the dotted line between the monitoring control unit 70 and the radio communication unit 61 mounted on the display control unit 60 arranged in, for example, the measurement unit 40 of the uppermost column of the panel D5 of the row panel D.

The monitoring control unit 70 has a screen configuration like the one shown in FIG. 12 to FIG. 14. The monitoring control unit 70 has the terminal display block 71 that displays each operation state of the respective measurement units 40 and the terminal operation block 72 that executes the control command to each of the respective measurement units 40. Then, as shown in FIG. 12, an array from the row panel A to a row panel M in the control center 100 is displayed by the terminal display block 71 of the monitoring control unit 70.

Then, when the maintenance worker confirms by the terminal display block 71 of the monitoring control unit 70 that an abnormality occurs in the measured value and/or the operation state of the measurement device 31 on which the measurement device display unit and the measurement device control unit are not mounted, the measurement device 31 being arranged in the measurement unit 40 of the panel D1 of the row panel D, it is possible to confirm that the abnormality occurs in a measurement unit 40b of the second column from the top of the panel D1 of the row panel D by operating the terminal operation block 72 of the monitoring control unit 70 as shown in FIG. 13.

After confirming that the abnormality occurs in the measurement unit 40b of the second column from the top of the panel D1 of the row panel D, a screen of a measurement device display control block 20 that is similar to the measurement device display unit and the measurement device control unit of the measurement unit 40b is displayed on the terminal display block 71 of the monitoring control unit 70 by operating the terminal operation block 72 of the monitoring control unit 70 as shown in FIG. 14.

More specifically, since the measurement device display unit and the measurement device control unit are displayed on the terminal display block 71 of the monitoring control unit 70, the measurement device display unit and the measurement device control unit are not mounted on each measurement unit 40 of each measurement device 31. The measurement device display unit and the measurement device control unit are not mounted on each measurement device 31 of each measurement unit 40, whereby a considerable reduction in cost can be achieved.

An example of a measurement device display block 21 and a measurement device operation block 22 of the measurement device display control block 20 displayed on the terminal display block 71 of the monitoring control unit 70 will be described on the basis of FIG. 14. The measurement device display block 21 of the measurement device display control block 20 is provided with a liquid crystal display 23 that displays a wide variety of numerical values and LED indication lamps from an LED indication lamp 24a to an LED indication lamp 24d. For example, the LED indication lamp 24a displays ON; the LED indication lamp 24b, OFF; the LED indication lamp 24c, FAULT; and the LED indication lamp 24d, ERROR, respectively.

Furthermore, the measurement device operation block 22 of the measurement device display control block 20 is provided with, for example, a direct control button block 25a, a remote control button 25b, a stop button 25c, a reverse rotation button 25d, a normal rotation button 25e, a MODE button 26a, a SET button 26b, an up button 26c, a down button 26d, a CLEAR/BACK button 26e, a RESET button 26f, and an external apparatus connection terminal 26g.

Therefore, for example, when the LED indication lamp 24d is lighted and displays ERROR, inspection and maintenance can be performed so that an error numerical value displayed on the liquid crystal display 23 becomes a normal value by operating the direct control button block 25a, the remote control button 25b, the stop button 25c, the reverse rotation button 25d, the normal rotation button 25e, the MODE button 26a, the SET button 26b, the up button 26c, the down button 26d, the CLEAR/BACK button 26e, the RESET button 26f, the external apparatus connection terminal 26g, and the like which are provided on the measurement device operation block 22 of the measurement device display control block 20.

As described above, according to the display control system in this Embodiment 3, the measurement device display unit and the measurement device control unit are configured not to be mounted on each measurement device 31 of the plurality of arrayed measurement units 40; the display control unit 60 connected through the line to each of the respective measurement units 40 and the radio communication unit 61 mounted on the display control unit 60 are mounted on any one of the measurement units 40; and there includes the monitoring control unit 70 which performs radio communication with the radio communication unit 61 as shown by the dotted line arrow, has the terminal display block 71 and the terminal operation block 72, and executes confirmation of each operation state and each control command of the respective measurement units 40, whereby the display control system capable of achieving a considerable reduction in cost can be obtained.

Furthermore, since the measurement device 31 of the measurement unit 40 to be targeted can be searched by the display control unit 70, inspection and maintenance of the measurement device 31 of the measurement unit 40 to be targeted can be performed while making the round from the row panel A to the row panel M in the control center 100 without performing inspection and maintenance and the time required for daily inspection work of the maintenance worker can be considerably reduced.

Besides, there has been described the case where the display control unit 60 is provided on any one of the respective measurement units 40 in, for example, the row panel D of the row panels from the row panel A to the row panel M in the control center 100, but is not limited to this. The display control unit 60 may be provided on each row panel and the same effects as the aforementioned Embodiment 1 can be exhibited.

### Embodiment 4

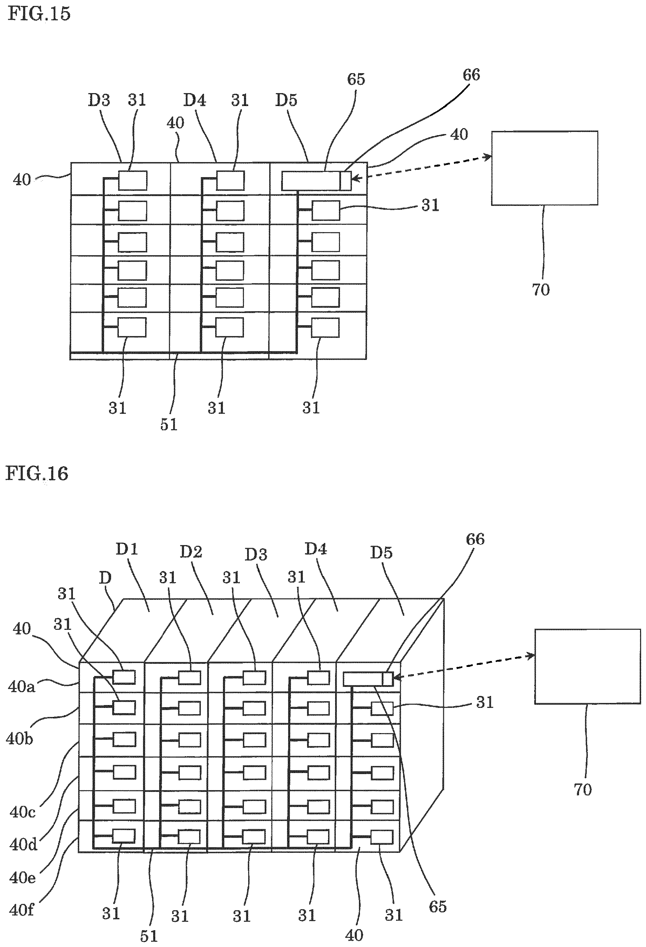

Embodiment 4 of the present invention will be described on the basis of FIG. 15 and FIG. 16. Then, in each of the drawings, identical or equivalent members and portions will be described with the same reference numerals (and letters) assigned thereto. FIG. 15 is a relevant part front view showing a circuit state in a display control system according to Embodiment 4 of the present invention. FIG. 16 is a perspective view showing the circuit state in the display control system according to Embodiment 4 of the present invention.

In Embodiment 4 of the present invention, there includes a display control unit 65 constituted by a programmable logic controller, as the aforementioned display control unit 60 of Embodiment 3. The display control unit 65 constituted by the programmable logic controller is mounted with a radio communication unit 66.

There is shown a case where the display control unit 65 constituted by the programmable logic controller is provided on any one of respective measurement units 40 in, for example, a row panel D of row panels from a row panel A to a row panel M in a control center 100. More specifically, there is shown the case where the display control unit 65 is provided on the measurement unit 40 of the uppermost column of a panel D5 of the row panel D.

In this Embodiment 4, there is shown the case where the display control unit 65 constituted by the programmable logic controller is connected through a line by a wired circuit network 51 to each measurement unit 40 of the row panels from the row panel A to the row panel M in the control center 100.

There includes a monitoring control unit 70 which performs radio communication with the radio communication unit 66 mounted on the display control unit 65 as shown by a dotted line arrow, has a terminal display block 71 and a terminal operation block 72, and executes confirmation of each operation state and each control command of the respective measurement units 40. The monitoring control unit 70 is arranged in a management room near the control center 100 within a range capable of performing radio communication with, for example, the radio communication unit 66.

A maintenance worker needs to confirm every day that there is no abnormality in a measured value and/or an operation state of each measurement device 31 on which a measurement device display unit and a measurement device control unit are not mounted, each measurement device 31 being arranged in each measurement unit 40 of the row panels from the row panel A to the row panel M in the control center 100.

The measured value and/or the operation state of each measurement device 31 on which the measurement device display unit and the measurement device control unit are not mounted is confirmed by performing radio communication as shown by the dotted line between the monitoring control unit 70 and the radio communication unit 66 mounted on the display control unit 65 constituted by the programmable logic controller, the display control unit 65 being arranged in, for example, the measurement unit 40 of the uppermost column of the panel D5 of the row panel D.

As described above, according to the display control system in this Embodiment 4, the measurement device display unit and the measurement device control unit are configured not to be mounted on each measurement device 31 of the plurality of arrayed measurement units 40; the display control unit 65 constituted by the programmable logic controller, which is connected through the line to each of the respective measurement units 40, and the radio communication unit 66 mounted on the display control unit 65 are mounted on any one of the measurement units 40; and there includes the monitoring control unit 70 which performs radio communication with the radio communication unit 66 as shown by the dotted line arrow, has the terminal display block 71 and the terminal operation block 72, and executes confirmation of each operation state and each control command of the respective measurement units 40, whereby the display control system capable of achieving a considerable reduction in cost can be obtained.

Furthermore, since the measurement device 31 of the measurement unit 40 to be targeted can be searched by the display control unit 70, inspection and maintenance of the measurement device 31 of the measurement unit 40 to be targeted can be performed while making the round from the row panel A to the row panel M in the control center 100 without performing inspection and maintenance and the time required for daily inspection work of the maintenance worker can be considerably reduced.

Besides, there has been described the case where the display control unit 60 is provided on any one of the respective measurement units 40 in, for example, the row panel D of the row panels from the row panel A to the row panel M in the control center 100, but is not limited to this. The display control unit 65 may be provided on each row panel and the same effects as the aforementioned Embodiment 4 can be exhibited.

### Embodiment 5

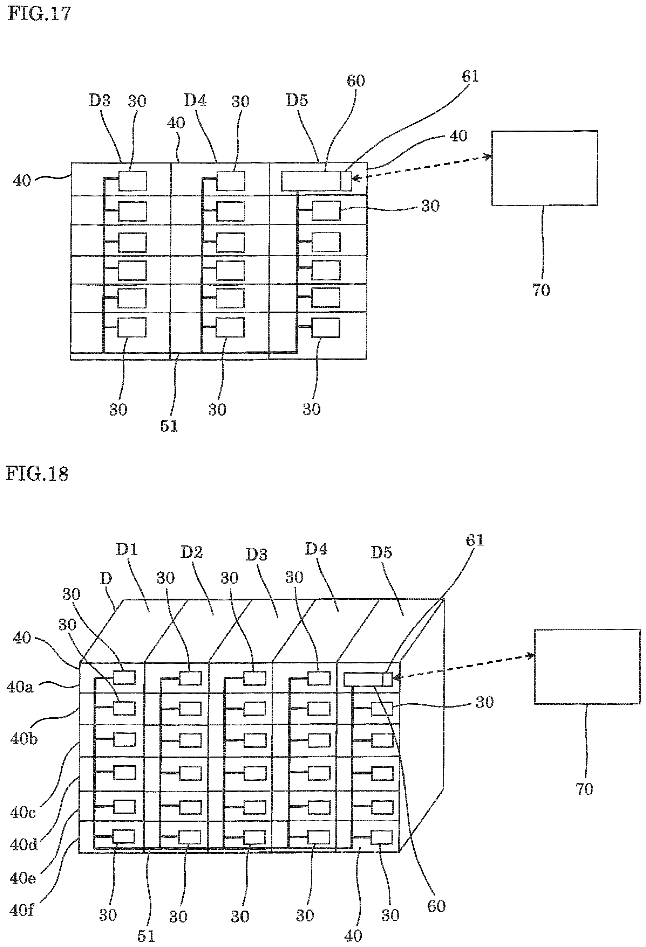

Embodiment 5 of the present invention will be described on the basis of FIG. 17 and FIG. 18. Then, in each of the drawings, identical or equivalent members and portions will be described with the same reference numerals (and letters) assigned thereto. FIG. 17 is a relevant part front view showing a circuit state in a display control system according to Embodiment 5 of the present invention. FIG. 18 is a perspective view showing the circuit state in the display control system according to Embodiment 5 of the present invention.

In the aforementioned Embodiment 3, there has been described the case where the measurement device display unit and the measurement device control unit are configured not to be mounted on each measurement device 31 of the plurality of arrayed measurement units 40; however, in this Embodiment 5, there is shown a case where each measurement device 30 of a plurality of arrayed measurement units 40 is not mounted with a measurement device display unit, but is mounted with a measurement device control unit.

In this Embodiment 5, since each measurement device 30 of the plurality of arrayed measurement units 40 is not mounted with the measurement device display unit, but is mounted with the measurement device control unit, in the case of searching the measurement device 30 of the measurement unit 40 to be targeted for inspection and maintenance by a monitoring control unit 70, the search is informed to a maintenance worker when the maintenance worker is present in a control center 100 or near the control center 100, the maintenance worker goes in front of the measurement device 30 of the measurement unit 40 to be targeted for inspection and maintenance and operates the measurement device control unit of the measurement device 30, so that the inspection and the maintenance of the measurement device 30 of the measurement unit 40 to be targeted can be performed directly.

### Embodiment 6

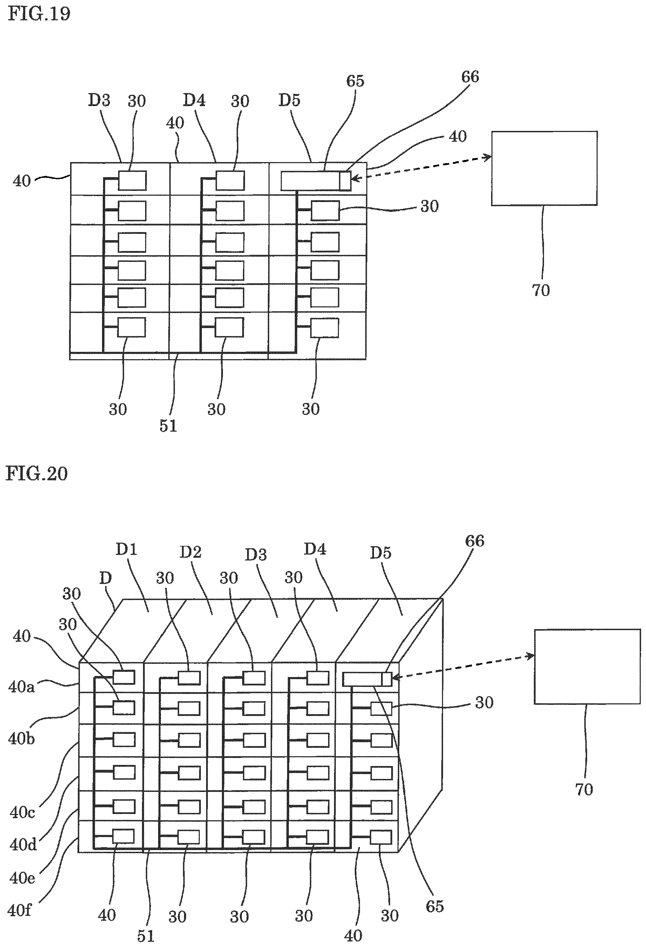

Embodiment 6 of the present invention will be described on the basis of FIG. 19 and FIG. 20. Then, in each of the drawings, identical or equivalent members and portions will be described with the same reference numerals (and letters) assigned thereto. FIG. 19 is a relevant part front view showing a circuit state in a display control system according to Embodiment 6 of the present invention. FIG. 20 is a perspective view showing the circuit state in the display control system according to Embodiment 6 of the present invention.

In the aforementioned Embodiment 4, there has been described the case where the measurement device display unit and the measurement device control unit are configured not to be mounted on each measurement device 31 of the plurality of arrayed measurement units 40; however, in this Embodiment 6, there is shown a case where each measurement device 30 of a plurality of arrayed measurement units 40 is not mounted with a measurement device display unit, but is mounted with a measurement device control unit.

In this Embodiment 6, since each measurement device 30 of the plurality of arrayed measurement units 40 is not mounted with the measurement device display unit, but is mounted with the measurement device control unit, in the case of searching the measurement device 30 of the measurement unit 40 to be targeted for inspection and maintenance by a monitoring control unit 70, the search is informed to a maintenance worker when the maintenance worker is present in a control center 100 or near the control center 100, the maintenance worker goes in front of the measurement device 30 of the measurement unit 40 to be targeted for inspection and maintenance and operates the measurement device display control unit of the measurement device 30, so that the inspection and the maintenance of the measurement device 30 of the measurement unit 40 to be targeted can be performed directly.

### Embodiment 7

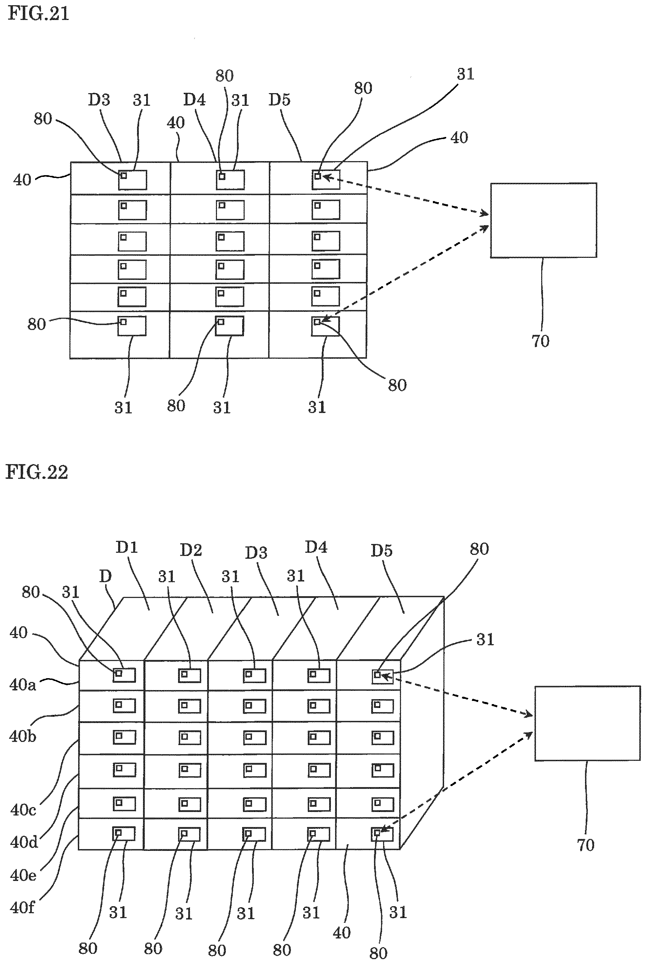

Embodiment 7 of the present invention will be described on the basis of FIG. 21 and FIG. 22. Then, in each of the drawings, identical or equivalent members and portions will be described with the same reference numerals (and letters) assigned thereto. FIG. 21 is a relevant part front view showing a circuit state in a display control system according to Embodiment 7 of the present invention. FIG. 22 is a perspective view showing the circuit state in the display control system according to Embodiment 7 of the present invention.

In this Embodiment 7, there includes: measurement units 40 which are arrayed in plurality and each of which has a measurement device 31 on which a measurement device display unit and a measurement device control unit are not mounted; radio communication units 80 each provided on each measurement device 31 of each measurement unit 40; and a monitoring control unit 70 which performs radio communication with the radio communication units 80, has a terminal display block 71 and a terminal operation block 72, and executes confirmation of each operation state and each control command of the respective measurement units 40.

A measured value and/or an operation state of each measurement device 31 on which the measurement device display unit and the measurement device control unit are not mounted is confirmed by performing radio communication between a radio communication unit 80 mounted on each measurement device 31 of each measurement unit 40 and the monitoring control unit 70 as shown by a dotted line.

Then, when a maintenance worker confirms by the terminal display block 71 of the monitoring control unit 70 that an abnormality occurs in the measured value and/or the operation state of the measurement device 31 on which the measurement device display unit and the measurement device control unit are not mounted, the measurement device 31 being arranged in the measurement unit 40 of a panel D1 of a row panel D, it is possible to confirm that the abnormality occurs in a measurement unit 40b of the second column from the top of the panel D1 of the row panel D by operating the terminal operation block 72 of the monitoring control unit 70 as shown in FIG. 13.

After confirming that the abnormality occurs in the measurement unit 40b of the second column from the top of the panel D1 of the row panel D, a screen of a measurement device display control block 20 that is similar to the measurement device display unit and the measurement device control unit of the measurement unit 40b is displayed on the terminal display block 71 of the monitoring control unit 70 by operating the terminal operation block 72 of the monitoring control unit 70 as shown in FIG. 14.

More specifically, since the measurement device display unit and the measurement device control unit are displayed on the terminal display block 71 of the monitoring control unit 70, the measurement device display unit and the measurement device control unit are not mounted on each measurement device 31 of each measurement unit 40. The measurement device display unit and the measurement device control unit are not mounted on each measurement device 31 of each measurement unit 40, whereby a considerable reduction in cost can be achieved.

As described above, according to the display control system in this Embodiment 7, the measurement device display unit and the measurement device control unit are configured not to be mounted on each measurement device 31 of the plurality of arrayed measurement units 40; the radio communication unit 80 is mounted on the measurement device 31 of each measurement unit 40; and there includes the monitoring control unit 70 which performs radio communication with the radio communication units 80 as shown by the dotted line arrows, has the terminal display block 71 and the terminal operation block 72, and executes confirmation of each operation state and each control command of the respective measurement units 40, whereby the display control system capable of achieving a considerable reduction in cost can be obtained.

Furthermore, since the measurement device 31 of the measurement unit 40 to be targeted can be searched by the display control unit 70, inspection and maintenance of the measurement device 31 of the measurement unit 40 to be targeted can be performed while making the round from a row panel A to a row panel M in the control center 100 without performing inspection and maintenance and the time required for daily inspection work of the maintenance worker can be considerably reduced.

### Embodiment 8

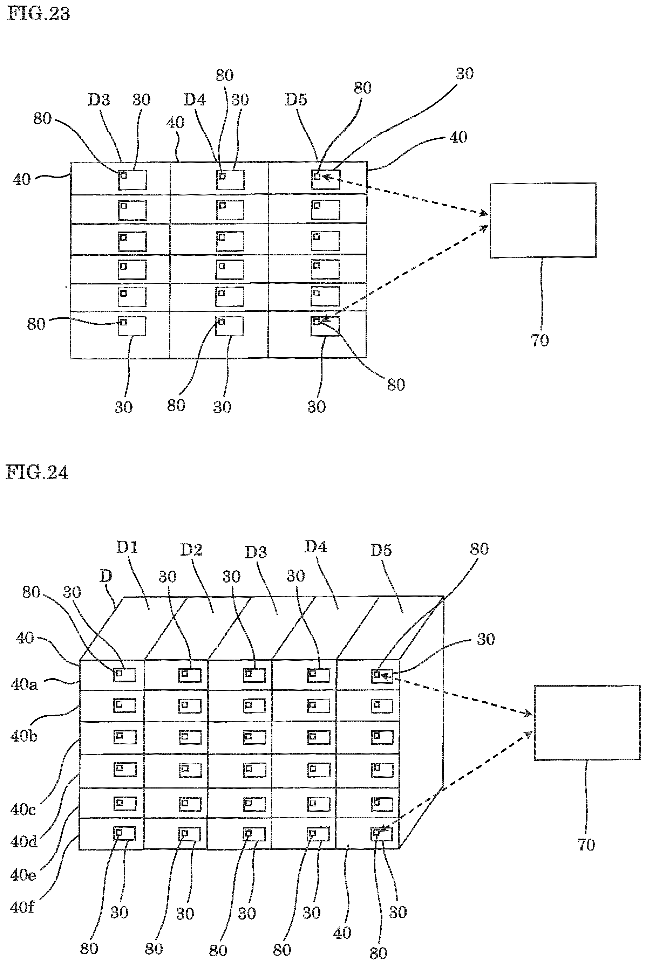

Embodiment 8 of the present invention will be described on the basis of FIG. 23 and FIG. 24. Then, in each of the drawings, identical or equivalent members and portions will be described with the same reference numerals (and letters) assigned thereto. FIG. 23 is a relevant part front view showing a circuit state in a display control system according to Embodiment 8 of the present invention. FIG. 24 is a perspective view showing the circuit state in the display control system according to Embodiment 8 of the present invention.

In the aforementioned Embodiment 7, there has been described the case where the measurement device display unit and the measurement device control unit are configured not to be mounted on each measurement device 31 of the plurality of arrayed measurement units 40; however, in this Embodiment 8, there is shown a case where each measurement device 30 of a plurality of arrayed measurement units 40 is not mounted with a measurement device display unit, but is mounted with a measurement device control unit.

In this Embodiment 8, since each measurement device 30 of the plurality of arrayed measurement units 40 is not mounted with the measurement device display unit, but is mounted with the measurement device control unit, in the case of searching the measurement device 30 of the measurement unit 40 to be targeted for inspection and maintenance by a monitoring control unit 70, the search is informed to a maintenance worker when the maintenance worker is present in a control center 100 or near the control center 100, the maintenance worker goes in front of the measurement device 30 of the measurement unit 40 to be targeted for inspection and maintenance and operates the measurement device control unit of the measurement device 30, so that the inspection and the maintenance of the measurement device 30 of the measurement unit 40 to be targeted can be performed directly.

### Embodiment 9

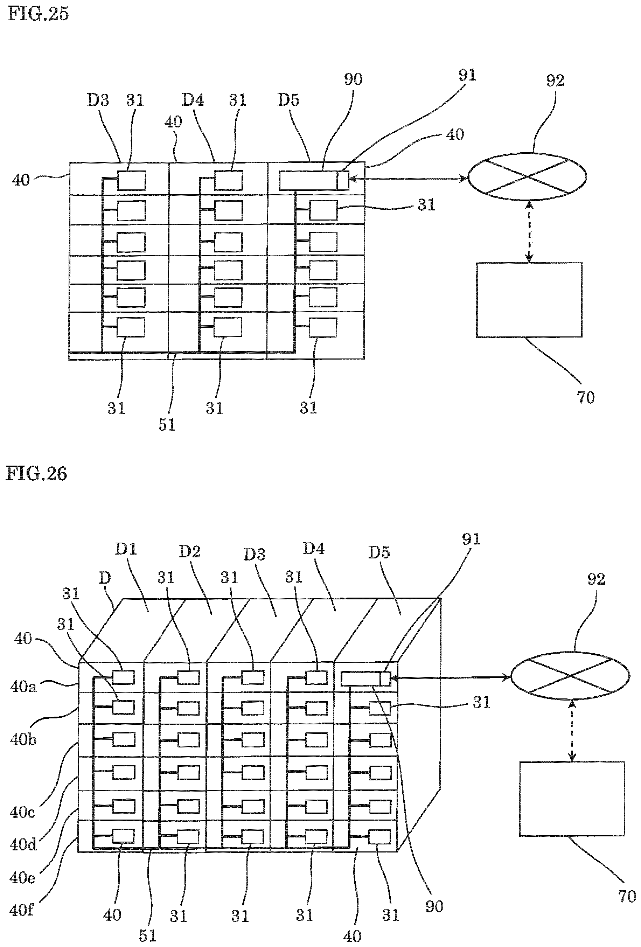

Embodiment 9 of the present invention will be described on the basis of FIG. 25 and FIG. 26. Then, in each of the drawings, identical or equivalent members and portions will be described with the same reference numerals (and letters) assigned thereto. FIG. 25 is a relevant part front view showing a circuit state in a display control system according to Embodiment 9 of the present invention. FIG. 26 is a perspective view showing the circuit state in the display control system according to Embodiment 9 of the present invention.

In a control center 100 in which row panels from a row panel A to a row panel M are arrayed in plurality in an electrical room 200, there includes a display control unit 90 which is provided on any one of respective measurement units 40, is connected through a line by a wired circuit network 51 to each measurement device 31 of each measurement unit 40 (the measurement device 31 is not mounted with a measurement device display unit and a measurement device control unit), and executes collection of each operation state and each control command of the respective measurement units 40.

The display control unit 90 is mounted with a wired communication unit 91. There is shown a case where the display control unit 90 is provided on any one of the respective measurement units 40 in, for example, a row panel D of the row panels from the row panel A to the row panel M in the control center 100. More specifically, there is shown the case where the display control unit 90 is provided on the measurement unit 40 of the uppermost column of a panel D5 of the row panel D.

In this Embodiment 9, there is shown the case where the display control unit 90 is connected through the line by the wired circuit network 51 to each measurement unit 40 of the row panels from the row panel A to the row panel M in the control center 100.

The wired communication unit 91 mounted on the display control unit 90 performs wired communication with a network circuit 92 as shown by a solid line arrow. Then, there includes a monitoring control unit 70 which performs radio communication with the network circuit 92 as shown by a dotted line arrow, has a terminal display block 71 and a terminal operation block 72, and executes confirmation of each operation state and each control command of the respective measurement units 40.

Since it may be permissible if the monitoring control unit 70 can perform radio communication with, for example, the network circuit 92, the monitoring control unit 70 may not be arranged in a management room near the control center 100 as in the aforementioned Embodiment 3, can be arranged at a more distant place than the control center 100, and can be remotely operated.

A maintenance worker needs to confirm every day that there is no abnormality in a measured value and/or an operation state of each measurement device 31 on which the measurement device display unit and the measurement device control unit are not mounted, each measurement device 31 being arranged in each measurement unit 40 of the row panels from the row panel A to the row panel M in the control center 100.

The measured value and/or the operation state of each measurement device 31 on which the measurement device display unit and the measurement device control unit are not mounted is confirmed such that, for example, wired communication is performed between the network circuit 92 and the wired communication unit 91 mounted on the display control unit 90 that is arranged in the measurement unit 40 of the uppermost column of the panel D5 of the row panel D, and radio communication is performed between the network circuit 92 and the monitoring control unit 70 as shown by the dotted line.

As described above, according to the display control system in this Embodiment 9, the measurement device display unit and the measurement device control unit are configured not to be mounted on each measurement device 31 of the plurality of arrayed measurement units 40; the display control unit 90 connected through the line to each of the respective measurement units 40 and the wired communication unit 91 mounted on the display control unit 90 are mounted on any one of the measurement units 40; wired communication is performed between the wired communication unit 91 and the network circuit 92 as shown by the solid line arrow; and there includes the monitoring control unit 70 which performs radio communication with the network circuit 92 as shown by the dotted line arrow, has the terminal display block 71 and the terminal operation block 72, and executes confirmation of each operation state and each control command of the respective measurement units 40, whereby the display control system capable of achieving a considerable reduction in cost can be obtained.

Furthermore, since the measurement device 31 of the measurement unit 40 to be targeted can be searched by the display control unit 70, inspection and maintenance of the measurement device 31 of the measurement unit 40 to be targeted can be performed while making the round from the row panel A to the row panel M in the control center 100 without performing inspection and maintenance and the time required for daily inspection work of the maintenance worker can be considerably reduced.

Besides, there has been described the case where the display control unit 90 is provided on any one of the respective measurement units 40 in, for example, the row panel D of the row panels from the row panel A to the row panel M in the control center 100, but is not limited to this. The display control unit 90 may be provided on each of the respective row panels and the same effects as the aforementioned Embodiment 9 can be exhibited.

### Embodiment 10

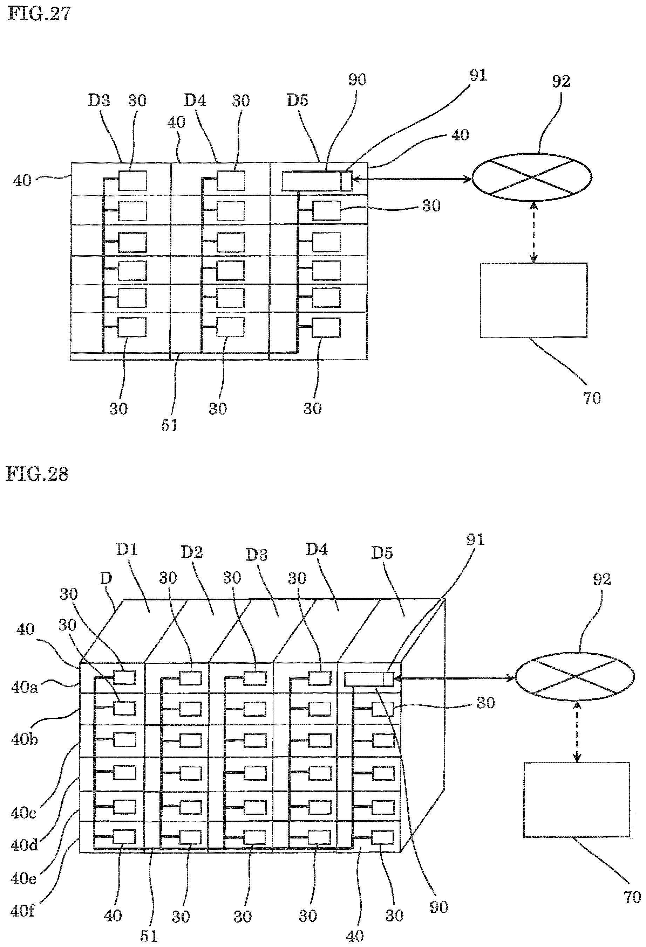

Embodiment 10 of the present invention will be described on the basis of FIG. 27 and FIG. 28. Then, in each of the drawings, identical or equivalent members and portions will be described with the same reference numerals (and letters) assigned thereto. FIG. 27 is a relevant part front view showing a circuit state in a display control system according to Embodiment 10 of the present invention. FIG. 28 is a perspective view showing the circuit state in the display control system according to Embodiment 10 of the present invention.

In the aforementioned Embodiment 9, there has been described the case where the measurement device display unit and the measurement device control unit are configured not to be mounted on each measurement device 31 of the plurality of arrayed measurement units 40; however, in this Embodiment 10, there is shown a case where each measurement device 30 of a plurality of arrayed measurement units 40 is not mounted with a measurement device display unit, but is mounted with a measurement device control unit.

In this Embodiment 10, since each measurement device 30 of the plurality of arrayed measurement units 40 is not mounted with the measurement device display unit, but is mounted with the measurement device control unit, in the case of searching the measurement device 30 of the measurement unit 40 to be targeted for inspection and maintenance by a monitoring control unit 70, the search is informed to a maintenance worker when the maintenance worker is present in a control center 100 or near the control center 100, the maintenance worker goes in front of the measurement device 30 of the measurement unit 40 to be targeted for inspection and maintenance and operates the measurement device control unit of the measurement device 30, so that the inspection and the maintenance of the measurement device 30 of the measurement unit 40 to be targeted can be performed directly.

### Embodiment 11

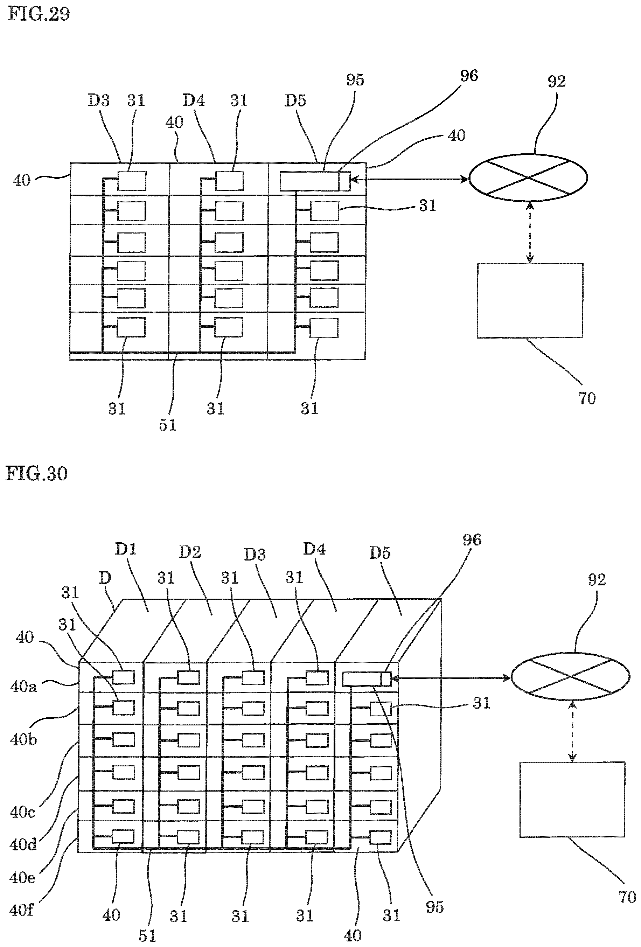

Embodiment 11 of the present invention will be described on the basis of FIG. 29 and FIG. 30. Then, in each of the drawings, identical or equivalent members and portions will be described with the same reference numerals (and letters) assigned thereto. FIG. 29 is a relevant part front view showing a circuit state in a display control system according to Embodiment 11 of the present invention. FIG. 30 is a perspective view showing the circuit state in the display control system according to Embodiment 11 of the present invention.

In Embodiment 11 of the present invention, there includes a display control unit 95 constituted by a programmable logic controller, as the aforementioned display control unit 90 of Embodiment 9. The display control unit 95 constituted by the programmable logic controller is mounted with a wired communication unit 96.

There is shown a case where the display control unit 95 constituted by the programmable logic controller is provided on any one of respective measurement units 40 in, for example, a row panel D of row panels from a row panel A to a row panel M in a control center 100. More specifically, there is shown the case where the display control unit 95 is provided on the measurement unit 40 of the uppermost column of a panel D5 of the row panel D.

In this Embodiment 11, there is shown the case where the display control unit 95 constituted by the programmable logic controller is connected through a line by a wired circuit network 51 to each measurement unit 40 of the row panels from the row panel A to the row panel M in the control center 100.

The wired communication unit 96 mounted on the display control unit 95 constituted by the programmable logic controller performs wired communication with a network circuit 92 as shown by a solid line arrow. Then, there includes a monitoring control unit 70 which performs radio communication with the network circuit 92 as shown by a dotted line arrow, has a terminal display block 71 and a terminal operation block 72, and executes confirmation of each operation state and each control command of the respective measurement units 40.

Since it may be permissible if the monitoring control unit 70 can perform radio communication with, for example, the network circuit 92, the monitoring control unit 70 may not be arranged in a management room near the control center 100 as in the aforementioned Embodiment 3, can be arranged at a more distant place than the control center 100, and can be remotely operated.

A maintenance worker needs to confirm every day that there is no abnormality in a measured value and/or an operation state of each measurement device 31 on which the measurement device display unit and the measurement device control unit are not mounted, each measurement device 31 being arranged in each measurement unit 40 of the row panels from the row panel A to the row panel M in the control center 100.

The measured value and/or the operation state of each measurement device 31 on which the measurement device display unit and the measurement device control unit are not mounted is confirmed such that, for example, wired communication is performed between the network circuit 92 and the wired communication unit 96 mounted on the display control unit 95 constituted by the programmable logic controller that is arranged in the measurement unit 40 of the uppermost column of the panel D5 of the row panel D, and radio communication is performed between the network circuit 92 and the monitoring control unit 70 as shown by the dotted line.

As described above, according to the display control system in this Embodiment 11, the measurement device display unit and the measurement device control unit are configured not to be mounted on each measurement device 31 of the plurality of arrayed measurement units 40; the display control unit 95 constituted by the programmable logic controller, the display control unit 95 being connected through the line to each of the respective measurement units 40, and the wired communication unit 96 mounted on the display control unit 95 constituted by the programmable logic controller are mounted on any one of the measurement units 40; wired communication is performed between the wired communication unit 96 and the network circuit 92 as shown by the solid line arrow; and there includes the monitoring control unit 70 which performs radio communication with the network circuit 92 as shown by the dotted line arrow, has the terminal display block 71 and the terminal operation block 72, and executes confirmation of each operation state and each control command of the respective measurement units 40, whereby the display control system capable of achieving a considerable reduction in cost can be obtained.

Furthermore, since the measurement device 31 of the measurement unit 40 to be targeted can be searched by the display control unit 70, inspection and maintenance of the measurement device 31 of the measurement unit 40 to be targeted can be performed while making the round from the row panel A to the row panel M in the control center 100 without performing inspection and maintenance and the time required for daily inspection work of the maintenance worker can be considerably reduced.

Besides, there has been described the case where the display control unit 95 constituted by the programmable logic controller is provided on any one of the respective measurement units 40 in, for example, the row panel D of the row panels from the row panel A to the row panel M in the control center 100, but is not limited to this. The display control unit 95 constituted by the programmable logic controller may be provided on each of the respective row panels and the same effects as the aforementioned Embodiment 11 can be exhibited.

### Embodiment 12

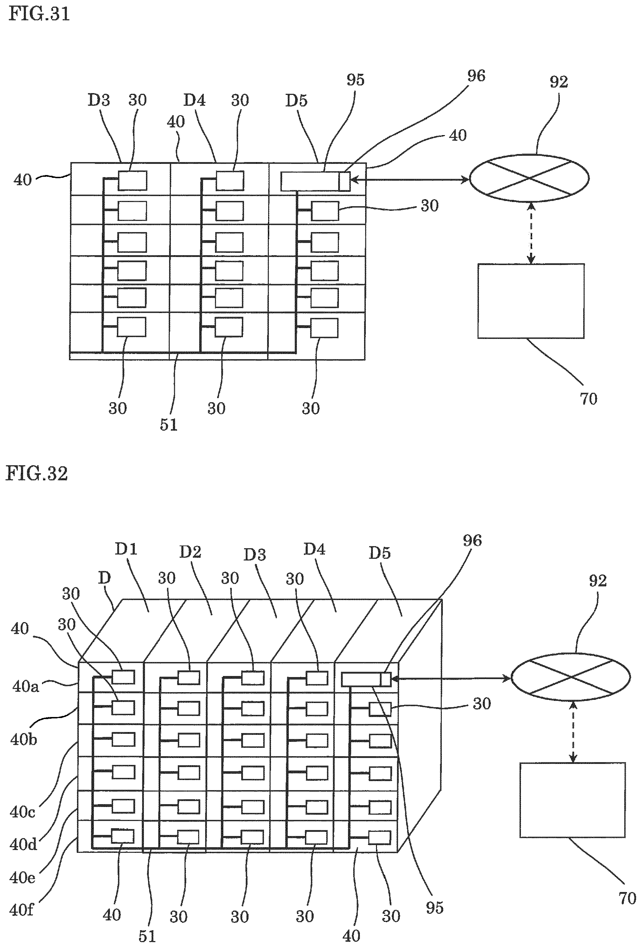

Embodiment 12 of the present invention will be described on the basis of FIG. 31 and FIG. 32. Then, in each of the drawings, identical or equivalent members and portions will be described with the same reference numerals (and letters) assigned thereto. FIG. 31 is a relevant part front view showing a circuit state in a display control system according to Embodiment 12 of the present invention. FIG. 32 is a perspective view showing the circuit state in the display control system according to Embodiment 12 of the present invention.

In the aforementioned Embodiment 11, there has been described the case where the measurement device display unit and the measurement device control unit are configured not to be mounted on each measurement device 31 of the plurality of arrayed measurement units 40; however, in this Embodiment 12, there is shown a case where each measurement device 30 of a plurality of arrayed measurement units 40 is not mounted with a measurement device display unit, but is mounted with a measurement device control unit.

In this Embodiment 12, since each measurement device 30 of the plurality of arrayed measurement units 40 is not mounted with the measurement device display unit, but is mounted with the measurement device control unit, in the case of searching the measurement device 30 of the measurement unit 40 to be targeted for inspection and maintenance by a monitoring control unit 70, the search is informed to a maintenance worker when the maintenance worker is present in a control center 100 or near the control center 100, the maintenance worker goes in front of the measurement device 30 of the measurement unit 40 to be targeted for inspection and maintenance and operates the measurement device control unit of the measurement device 30, so that the inspection and the maintenance of the measurement device 30 of the measurement unit 40 to be targeted can be performed directly.

By the way, the monitoring control unit 70 may constituted by, for example, a touch panel terminal or a tablet terminal and the same effects can be exhibited.

### Embodiment 13

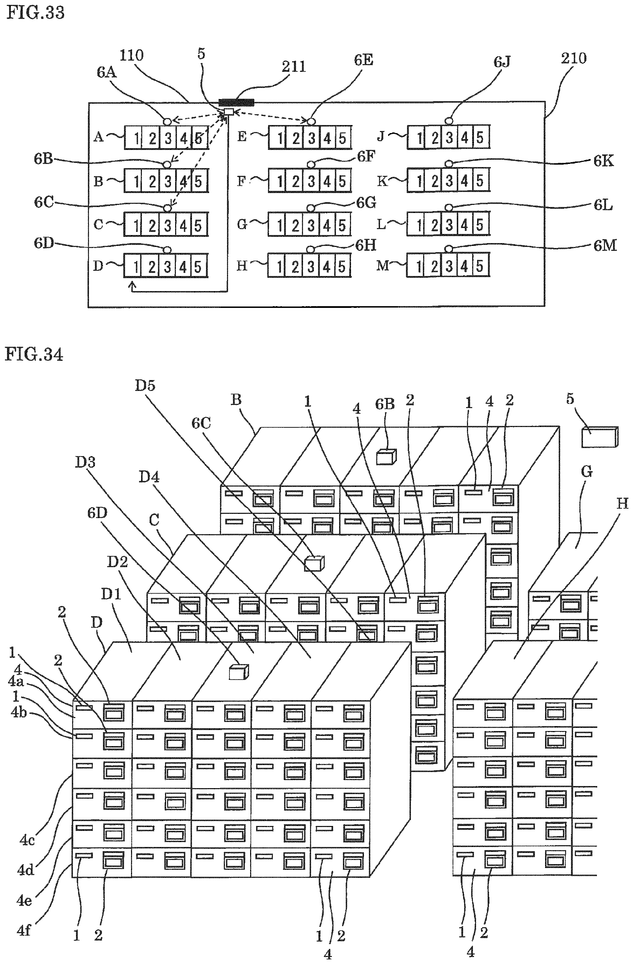

Hereinafter, Embodiment 13 of the present invention will be described on the basis of FIG. 33 to FIG. 37. Then, in each of the drawings, identical or equivalent members and portions will be described with the same reference numerals (and letters) assigned thereto. FIG. 33 is a plan view showing a control center in a specific position navigation system according to Embodiment 13 of the present invention. FIG. 34 is a perspective view showing the control center in the specific position navigation system according to Embodiment 13 of the present invention.

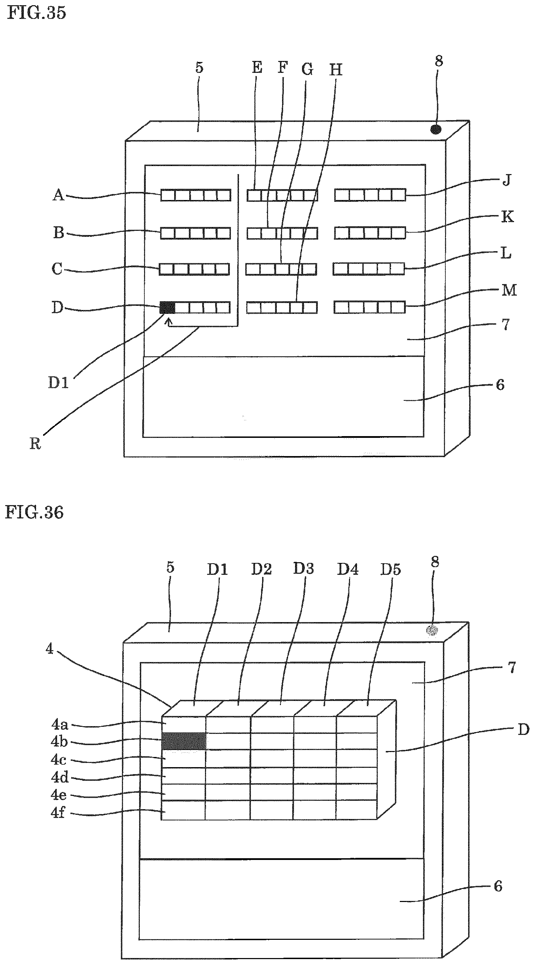

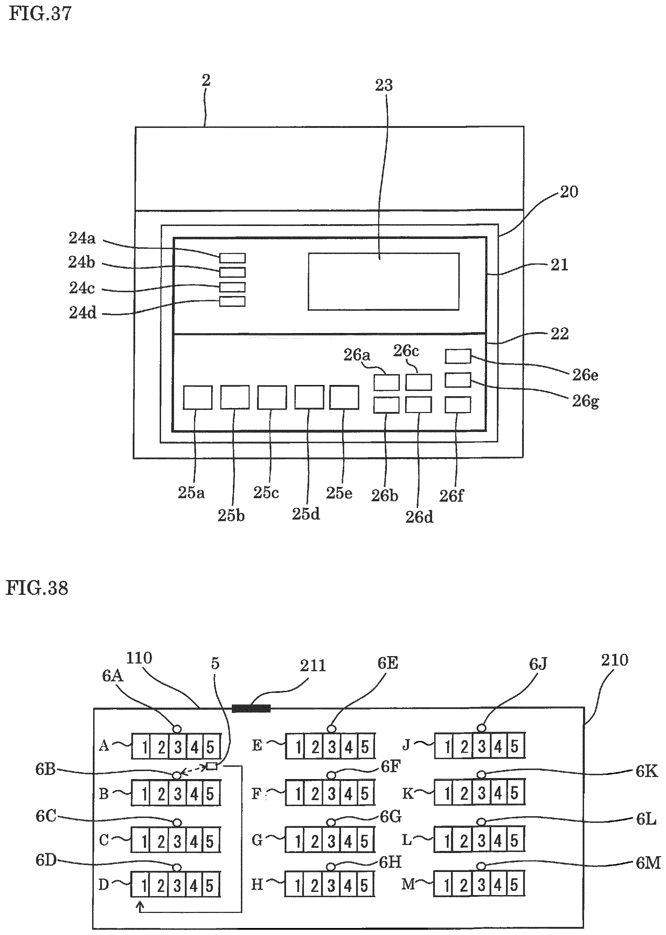

FIG. 35 is a perspective view showing the specific position navigation system according to Embodiment 13 of the present invention. FIG. 36 is a perspective view showing the specific position navigation system according to Embodiment 13 of the present invention. FIG. 37 is a front view showing the measurement device of the control center according to Embodiment 13 of the present invention.

FIG. 33 shows a case where a control center 110 is arranged in an electrical room 210. In the control center 100, for example, six columns of measurement units 4 each constituted by a load nameplate 1 and a measurement device 2, are arranged and unitized to constitute one panel; and, for example, five rows of the panels are juxtaposed to constitute one row panel and these row panels are arrayed in plurality. More specifically, by way of an example, the drawing shows the case where row panels from a row panel A to a row panel M are arranged. In the case of inspecting and maintaining the control center 110 arranged in the electrical room 210, the inspection and the maintenance are performed by opening a door 211 and by entering the room.

For example, in the row panel D, six columns of the measurement units 4, for example, from a measurement unit 4a to a measurement unit 4f, each constituted by the load nameplate 1 and the measurement device 2, are arranged and unitized to constitute one panel; and, for example, five rows of these panels from a panel D1 to a panel D5, are juxtaposed to constitute one row panel D. For example, other row panels from the row panel A to the row panel C and from the row panel E to the row panel M, are also similarly configured such that, for example, six columns of the measurement units 4 each constituted by the load nameplate 1 and the measurement device 2, are arranged and unitized to constitute one panel; and, for example, five rows of these panels are juxtaposed to constitute one row panel, respectively.

In the control center 110 in which these row panels from the row panel A to row panel M are arrayed in plurality in the electrical room 210, a maintenance worker confirms every day while going round in sequence that there is no abnormality in a measured value and/or an operation state of each measurement device 2 arranged in each measurement unit 4. When the maintenance worker confirms that an abnormality occurs in the measured value and/or the operation state of the measurement device 2 arranged in the measurement unit 4, for example, in FIG. 34, in the case where the abnormality occurs in the measurement unit 4b of the second column from the top of the panel D1 of the row panel D, the maintenance worker can navigate to the position of the measurement device 2 of the measurement unit 4b to be targeted for the inspection and maintenance.

In this Embodiment 13, for example, a radio communication terminal device 6A to 6M is arranged in each of the row panels from the row panel A to the row panel M, respectively; the maintenance worker opens the door 211 of the electrical room 210 and enters therein and performs radio transmission from a terminal radio communication portion 8 of a radio communication terminal unit 5 to a plurality of radio communication terminal devices, the terminal radio communication portion 8 being constituted by, for example, a tablet terminal in which a maintenance worker has, whereby the present position of the radio communication terminal unit 5 is specified by a location information service system (not shown in the drawing).

More specifically, it is based on a location information service system by a received radio wave strength system; and a distance is calculated backward from radio wave strength between the radio communication terminal unit 5 and each of the radio communication terminal devices 6A to 6M arranged in the row panels from A to the row panel M, whereby the distance from the radio communication terminal device can be measured by receiving radio waves of three or more radio communication terminal devices and by measuring the strength and the position of the radio communication terminal unit 5 can be specified by measuring three or more distances.

If the position of the radio communication terminal unit 5 is specified, a load name, a row panel code, and the like of the measurement device of an inspection object to be specified, for example, the measurement unit 4b of the panel D1 of the row panel D, is input by a terminal operation block 6 of the radio communication terminal unit 5 and radio transmission is performed to, for example, the radio communication terminal device 6A of the row panel A.

Its information is analyzed on the management database side; a navigation screen which navigates by, for example, a route R to the panel D1 of the row panel D of an inspection object to be specified is displayed on a terminal display block 7 of the radio communication terminal unit 5 through, for example, the radio communication terminal device 6A as shown in FIG. 35; and the maintenance worker proceeds along the route R while watching the navigation screen. When the maintenance worker reaches in front of the panel D1 of the row panel D, the measurement unit 4b of the panel D1 of the row panel D, which is the inspection object to be specified, is specified as shown in FIG. 36.

As described above, according to the specific position navigation system in this Embodiment 13, the route R to the position of the measurement device of the measurement unit to be targeted can be navigated and the moving time of the maintenance worker to the position of the measurement device of the measurement unit to be targeted and the searching time of the measurement device of the measurement unit to be targeted can be reduced: and therefore, a reduction of maintenance cost can be achieved.

By the way, the maintenance of the measurement unit 4b of the panel D1 is performed in the measurement device 2 of the measurement unit 4b and an example of a measurement device display block 21 and a measurement device operation block 22 of a measurement device display control block 20 of the measurement device 2 will be described on the basis of FIG. 37.

The measurement device display block 21 of the measurement device display control block 20 is provided with a liquid crystal display 23 that displays a wide variety of numerical values and LED indication lamps from an LED indication lamp 24a to an LED indication lamp 24d. For example, the LED indication lamp 24a displays ON; the LED indication lamp 24b, OFF; the LED indication lamp 24c, FAULT; and the LED indication lamp 24d, ERROR, respectively.

Furthermore, the measurement device operation block 22 of the measurement device display control block 20 is provided with, for example, a direct control button block 25a, a remote control button 25b, a stop button 25c, a reverse rotation button 25d, a normal rotation button 25e, a MODE button 26a, a SET button 26b, an up button 26c, a down button 26d, a CLEAR/BACK button 26e, a RESET button 26f, and an external apparatus connection terminal 26g.

Then, inspection and maintenance can be performed by operating the direct control button block 25a, the remote control button 25b, the stop button 25c, the reverse rotation button 25d, the normal rotation button 25e, the MODE button 26a, the SET button 26b, the up button 26c, the down button 26d, the CLEAR/BACK button 26e, the RESET button 26f, the external apparatus connection terminal 26g, and the like which are provided on the measurement device operation block 22 of the measurement device display control block 20.

### Embodiment 14

Embodiment 14 of the present invention will be described on the basis of FIG. 38 to FIG. 40. Then, in each of the drawings, identical or equivalent members and portions will be described with the same reference numerals (and letters) assigned thereto. FIG. 38 is a plan view showing a control center in a specific position navigation system according to Embodiment 14 of the present invention.

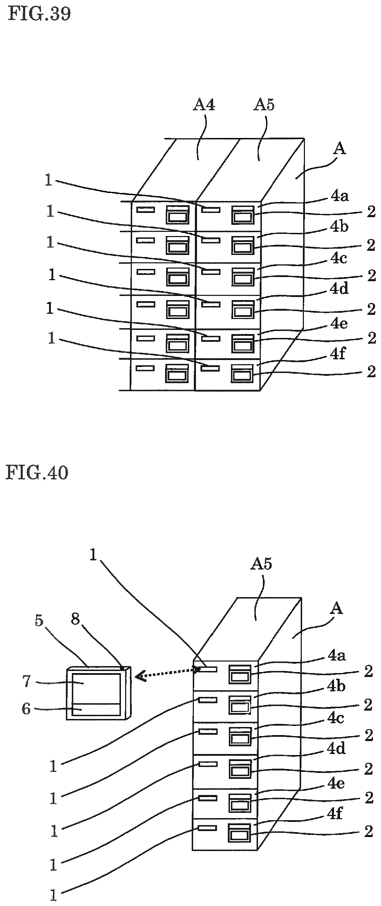

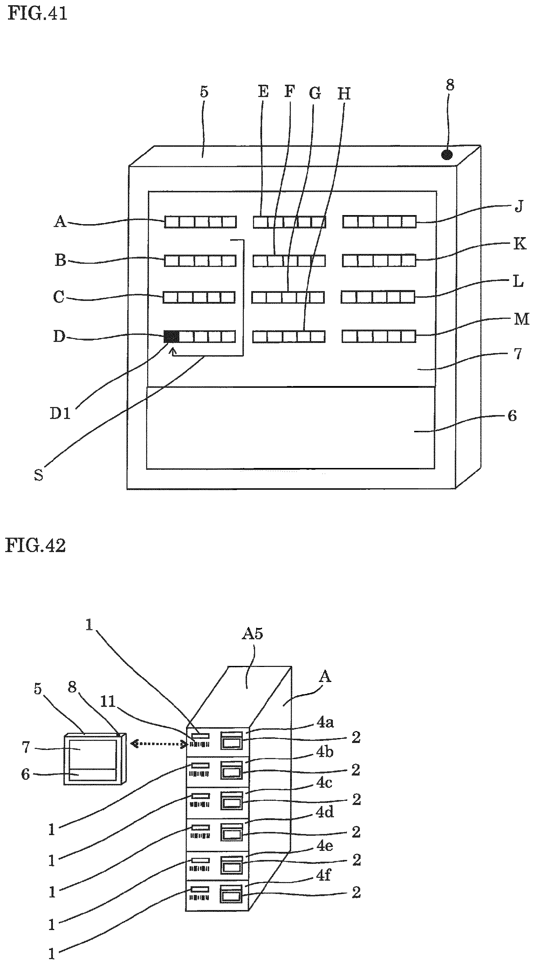

FIG. 39 is a relevant part perspective view showing a row panel in the specific position navigation system according to Embodiment 14 of the present invention. FIG. 40 is a perspective view showing the specific position navigation system according to Embodiment 14 of the present invention. FIG. 41 is a perspective view showing the specific position navigation system according to Embodiment 14 of the present invention.

In the aforementioned Embodiment 13, there has been described the case where the distance is calculated backward from the radio wave strength between the radio communication terminal unit 5 and each of the radio communication terminal devices 6A to 6M arranged in the row panels from A to the row panel M, whereby the distance from the radio communication terminal device is measured by receiving radio waves of three or more radio communication terminal devices and by measuring the strength and the position of the radio communication terminal unit 5 is specified by measuring three or more distances.

However, in this Embodiment 14, a name of a load nameplate 1 of a measurement unit 4a of a row panel near a door 211 of an electrical room 211, for example, a panel A5 of a row panel A is imaged by an imaging unit such as a camera (not shown in the drawing) provided on a radio communication terminal unit 5 and radio transmission of imaging data imaged by the imaging unit of the radio communication terminal unit 5 is performed from a terminal radio communication portion 8 of the radio communication terminal unit 5 to, for example, a radio communication terminal device 6B, whereby its information is analyzed on the management database side and the position of the radio communication terminal unit 5 is specified.

If the position of the radio communication terminal unit 5 is specified, a load name, a row panel code, and the like of the measurement device of an inspection object to be specified, for example, a measurement unit 4b of a panel D1 of a row panel D, is input by a terminal operation block 6 of the radio communication terminal unit 5 and radio transmission is performed to, for example, the radio communication terminal device 6B of a row panel B. Its information is analyzed on the management database side, as shown in FIG. 41; a navigation screen which navigates by, for example, a route S to the panel D1 of the row panel D of the inspection object to be specified is displayed on a terminal display block 7 of the radio communication terminal unit 5 through, for example, the radio communication terminal device 6B; and a maintenance worker proceeds along the route S while watching the navigation screen and can reach in front of the panel D1 of the row panel D of the inspection object.

According to this Embodiment 14, the name of the load nameplate 1 of the measurement unit 4a of the row panel near the door 211 of the electrical room 211, for example, the panel A5 of the row panel A is imaged by the imaging unit such as the camera (not shown in the drawing) of the radio communication terminal unit 5 and radio transmission of the imaging data is performed from the terminal radio communication portion 8 of the radio communication terminal unit 5 to, for example, the radio communication terminal device 6B, whereby its information is analyzed on the management database side and the position of the radio communication terminal unit 5 is specified.

After the position of the radio communication terminal unit 5 is specified, the load name, the row panel code, and the like of the measurement device of the inspection object to be specified, for example, the measurement unit 4b of the panel D1 of the row panel D, is input by the terminal operation block 6 of the radio communication terminal unit 5 and radio transmission is performed to, for example, the radio communication terminal device 6B of the row panel B, whereby the information is analyzed on the management database side and the navigation screen which navigates by, for example, the route S to the panel D1 of the row panel D of the inspection object to be specified is displayed on the terminal display block 7 of the radio communication terminal unit 5 as shown in FIG. 41 through, for example, the radio communication terminal device 6B.

Therefore, the route S to the position of the measurement device of the measurement unit to be targeted can be navigated and the moving time of the maintenance worker to the position of the measurement device of the measurement unit to be targeted and the searching time of the measurement device of the measurement unit to be targeted can be reduced; and thus, a reduction of maintenance cost can be achieved.

### Embodiment 15

Embodiment 15 of the present invention will be described on the basis of FIG. 42. FIG. 42 is a perspective view showing a specific position navigation system according to Embodiment 15 of the present invention.

In the aforementioned Embodiment 14, there has been described the case where the name of the load nameplate 1 of the measurement unit 4a of the row panel near the door 211 of the electrical room 211, for example, the panel A5 of the row panel A is imaged by the imaging unit such as the camera (not shown in the drawing) of the radio communication terminal unit 5 and radio transmission of the imaging data is performed from the terminal radio communication portion 8 of the radio communication terminal unit 5 to, for example, the radio communication terminal device 6B, whereby its information is analyzed on the management database side and the position of the radio communication terminal unit 5 is specified.

However, in this Embodiment 15, there is shown a case where each row panel is provided with an information code, that is, a bar code 11 which specifies a load nameplate 1. Then, the bar code 11 which specifies the load nameplate 1 of, for example, a measurement unit 4a of a panel A5 of a row panel A, is read by a reader (not shown in the drawing) provided on a radio communication terminal unit 5 and radio transmission of data of the bar code 11 is performed from a terminal radio communication portion 8 to, for example, a radio communication terminal device 6B, whereby its information is analyzed on the management database side and the position of the radio communication terminal unit 5 is specified.

If the position of the radio communication terminal unit 5 is specified, a load name, a row panel code, and the like of the measurement device of an inspection object to be specified, for example, a measurement unit 4b of a panel D1 of a row panel D, is input by a terminal operation block 6 of the radio communication terminal unit 5 and radio transmission is performed to, for example, the radio communication terminal device 6B of a row panel B.

Its information is analyzed on the management database side; and a navigation screen which navigates by, for example, a route S to the panel D1 of the row panel D of the inspection object to be specified is displayed on a terminal display block 7 of the radio communication terminal unit 5 as shown in FIG. 41 through, for example, the radio communication terminal device 6B; and a maintenance worker proceeds along the route S while watching the navigation screen and can reach in front of the panel D1 of the row panel D of the inspection object.

According to this Embodiment 15, the bar code 11 which specifies the load nameplate 1 of the row panel near a door 211 of an electrical room 211, for example, the measurement unit 4a of the panel A5 of the row panel A, is read by the reader (not shown in the drawing) of the radio communication terminal unit 5 and radio transmission of the data of the bar code 11 is performed from the terminal radio communication portion 8 of the radio communication terminal unit 5 to, for example, the radio communication terminal device 6B, whereby its information is analyzed on the management database side and the position of the radio communication terminal unit 5 is specified.

Then, after the position of the radio communication terminal unit 5 is specified, the load name, the row panel code, and the like of the measurement device of the inspection object to be specified, for example, the measurement unit 4b of the panel D1 of the row panel D, is input by the terminal operation block 6 of the radio communication terminal unit 5 and radio transmission is performed to, for example, the radio communication terminal device 6B of the row panel B, whereby its information is analyzed on the management database side and the navigation screen which navigates by, for example, the route S to the panel D1 of the row panel D of the inspection object to be specified is displayed on the terminal display block 7 of the radio communication terminal unit 5 as shown in FIG. 41 through, for example, the radio communication terminal device 6B.

Therefore, the route S to the position of the measurement device of the measurement unit to be targeted can be navigated and the moving time of the maintenance worker to the position of the measurement device of the measurement unit to be targeted and the searching time of the measurement device of the measurement unit to be targeted can be reduced; and thus, a reduction of maintenance cost can be achieved.

### Embodiment 16

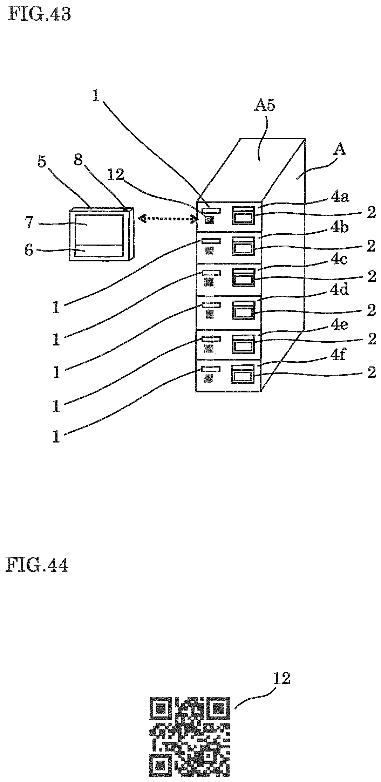

Embodiment 16 of the present invention will be described on the basis of FIG. 43 and FIG. 44. Then, in each of the drawings, identical or equivalent members and portions will be described with the same reference numerals (and letters) assigned thereto. FIG. 43 is a perspective view showing a specific position navigation system according to Embodiment 16 of the present invention. FIG. 44 is a front view showing a two-dimensional code in the specific position navigation system according to Embodiment 16 of the present invention.

In this Embodiment 16, there is shown a case where a two-dimensional code 12 that specifies a load nameplate 1 like the one shown in FIG. 44 is provided on each row panel. An information code, that is, a two-dimensional code 12 which specifies the load nameplate 1 of, for example, a measurement unit 4a of a panel A5 of a row panel A, is read by a reader (not shown in the drawing) provided on a radio communication terminal unit 5 and radio transmission of data of the two-dimensional code 12 is performed from a terminal radio communication portion 8 to, for example, a radio communication terminal device 6B, whereby its information is analyzed on the management database side and the position of the radio communication terminal unit 5 is specified.

If the position of the radio communication terminal unit 5 is specified, a load name, a row panel code, and the like of a measurement device of an inspection object to be specified, for example, a measurement unit 4b of a panel D1 of a row panel D, is input by a terminal operation block 6 of the radio communication terminal unit 5 and radio transmission is performed to, for example, the radio communication terminal device 6B of a row panel B. Its information is analyzed on the management database side; and a navigation screen which navigates by, for example, a route S to the panel D1 of the row panel D of the inspection object to be specified is displayed on a terminal display block 7 of the radio communication terminal unit 5 as shown in FIG. 41 through, for example, the radio communication terminal device 6B; and a maintenance worker proceeds along the route S while watching the navigation screen and can reach in front of the panel D1 of the row panel D of the inspection object.

According to this Embodiment 16, the two-dimensional code 12 which specifies the load nameplate 1 of the row panel near a door 211 of an electrical room 211, for example, the measurement unit 4a of the panel A5 of the row panel A, is read by the reader (not shown in the drawing) of the radio communication terminal unit 5 and radio transmission of the data of the two-dimensional code 12 is performed from the terminal radio communication portion 8 of the radio communication terminal unit 5 to, for example, the radio communication terminal device 6B, whereby its information is analyzed on the management database side and the position of the radio communication terminal unit 5 is specified.

Then, after the position of the radio communication terminal unit 5 is specified, the load name, the row panel code, and the like of the measurement device of the inspection object to be specified, for example, the measurement unit 4b of the panel D1 of the row panel D, is input by the terminal operation block 6 of the radio communication terminal unit 5 and radio transmission is performed to, for example, the radio communication terminal device 6B of the row panel B, whereby its information is analyzed on the management database side and the navigation screen which navigates by, for example, the route S to the panel D1 of the row panel D of the inspection object to be specified is displayed on the terminal display block 7 of the radio communication terminal unit 5 as shown in FIG. 41 through, for example, the radio communication terminal device 6B.

Therefore, the route S to the position of the measurement device of the measurement unit to be targeted can be navigated and the moving time of the maintenance worker to the position of the measurement device of the measurement unit to be targeted and the searching time of the measurement device of the measurement unit to be targeted can be reduced; and thus, a reduction of maintenance cost can be achieved.

Incidentally, an example of a bar code and the two-dimensional code has been described as the information code; however, in addition to this, any code such as a three-dimensional code may be permissible if the code can extract information.

### Embodiment 17

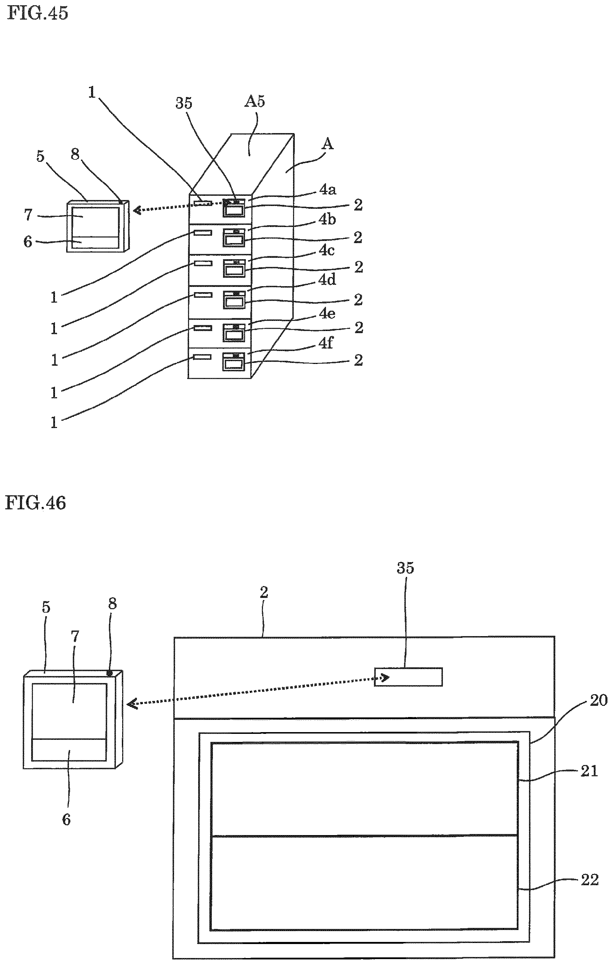

Embodiment 17 of the present invention will be described on the basis of FIG. 45 and FIG. 46. Then, in each of the drawings, identical or equivalent members and portions will be described with the same reference numerals (and letters) assigned thereto. FIG. 45 is a perspective view showing a specific position navigation system according to Embodiment 17 of the present invention. FIG. 46 is a perspective view showing the specific position navigation system according to Embodiment 17 of the present invention.

In this Embodiment 17, there is shown a case where a radio frequency (RF) code 35 that specifies a measurement device 2 like the one shown in FIG. 46 is provided on the measurement device 2 of each row panel. The RF code 35 that specifies the measurement device 2 of, for example, a measurement unit 4a of a panel A5 of a row panel A, is read by a reader (not shown in the drawing) provided on a radio communication terminal unit 5 and radio transmission of data of the RF code 35 is performed from a terminal radio communication portion 8 to, for example, a radio communication terminal device 6B, whereby its information is analyzed on the management database side and the position of the radio communication terminal unit 5 is specified.

If the position of the radio communication terminal unit 5 is specified, a load name, a row panel code, and the like of a measurement device of an inspection object to be specified, for example, a measurement unit 4b of a panel D1 of a row panel D, is input by a terminal operation block 6 of the radio communication terminal unit 5 and radio transmission is performed to, for example, the radio communication terminal device 6B of a row panel B.

Its information is analyzed on the management database side; and a navigation screen which navigates by, for example, a route S to the panel D1 of the row panel D of the inspection object to be specified is displayed on a terminal display block 7 of the radio communication terminal unit 5 as shown in FIG. 9 through, for example, the radio communication terminal device 6B; and a maintenance worker proceeds along the route S while watching the navigation screen and can reach in front of the panel D1 of the row panel D of the inspection object.

According to this Embodiment 17, the RF code 35 which specifies the measurement device 2 of the row panel near a door 211 of an electrical room 211, for example, the measurement unit 4a of the panel A5 of the row panel A, is read by the reader (not shown in the drawing) of the radio communication terminal unit 5 and radio transmission of the data of the RF code 35 is performed from the terminal radio communication portion 8 of the radio communication terminal unit 5 to, for example, the radio communication terminal device 6B, whereby its information is analyzed on the management database side and the position of the radio communication terminal unit 5 is specified.

Then, after the position of the radio communication terminal unit 5 is specified, the load name, the row panel code, and the like of the measurement device of the inspection object to be specified, for example, the measurement unit 4b of the panel D1 of the row panel D, is input by the terminal operation block 6 of the radio communication terminal unit 5 and radio transmission is performed to, for example, the radio communication terminal device 6B of the row panel B, whereby its information is analyzed on the management database side and the navigation screen which navigates by, for example, the route S to the panel D1 of the row panel D of the inspection object to be specified is displayed on the terminal display block 7 of the radio communication terminal unit 5 as shown in FIG. 41 through, for example, the radio communication terminal device 6B.

Therefore, the route S to the position of the measurement device of the measurement unit to be targeted can be navigated and the moving time of the maintenance worker to the position of the measurement device of the measurement unit to be targeted and the searching time of the measurement device of the measurement unit to be targeted can be reduced; and thus, a reduction of maintenance cost can be achieved.

### Embodiment 18

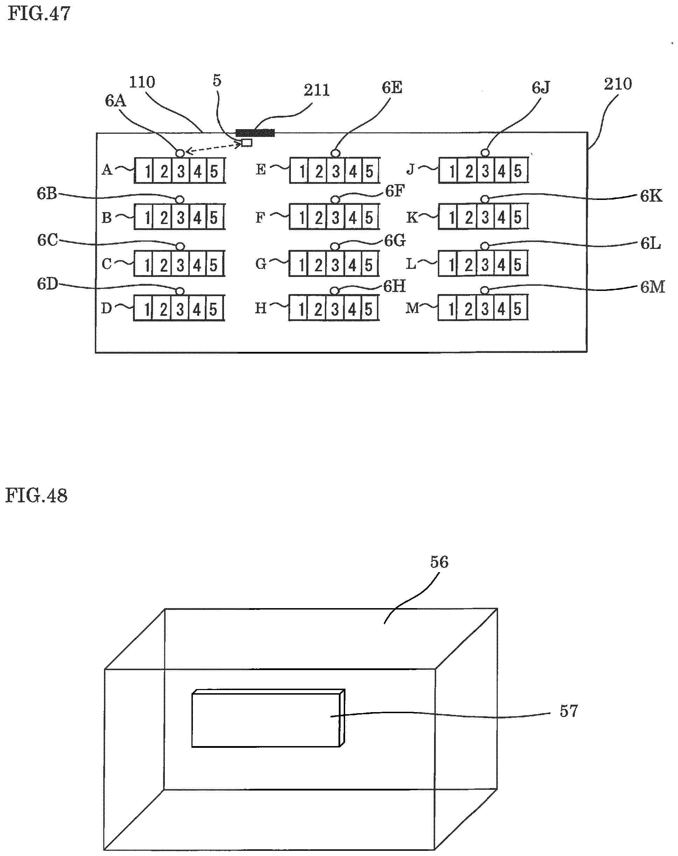

Embodiment 18 of the present invention will be described on the basis of FIG. 47 to FIG. 49. Then, in each of the drawings, identical or equivalent members and portions will be described with the same reference numerals (and letters) assigned thereto. FIG. 47 is a plan view showing a control center in a specific position navigation system according to Embodiment 18 of the present invention.

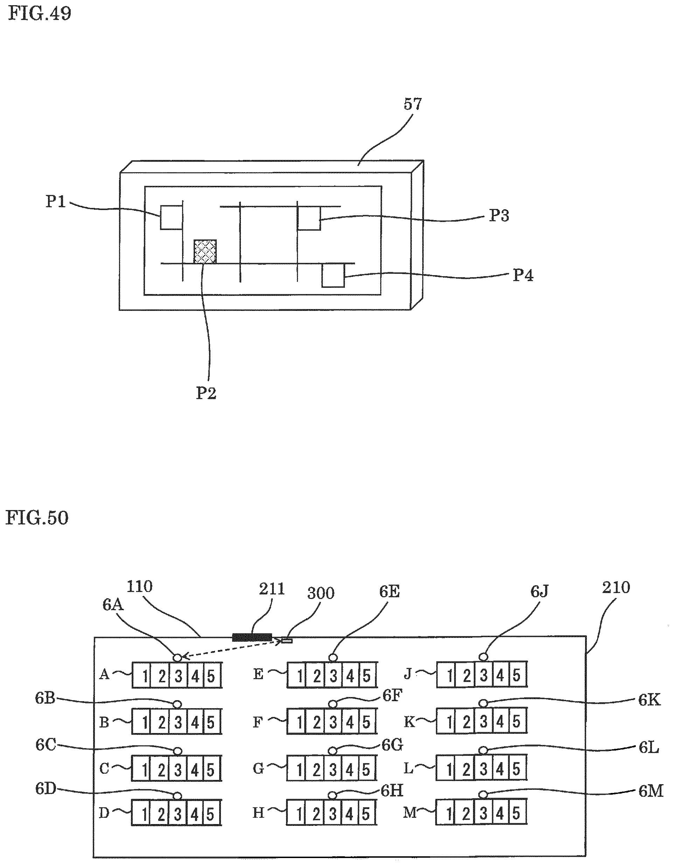

FIG. 48 is a perspective view showing a management center in the specific position navigation system according to Embodiment 18 of the present invention. FIG. 49 is a perspective view showing a display device of the management center in the specific position navigation system according to Embodiment 18 of the present invention.

In this Embodiment 18, there is provided a function that specifies at which electrical room a maintenance worker is present, more specifically, at which electrical room the position of a radio communication terminal unit 5 is located. The maintenance worker opens a door 211 of an electrical room 210 and enters therein and performs radio transmission from a terminal radio communication portion 8 of the radio communication terminal unit 5 to, for example, a radio communication terminal device 6A, the terminal radio communication portion 8 being constituted by, for example, a tablet terminal in which the maintenance worker has, whereby a position information display panel 57 provided on a management center 56 displays that the maintenance worker enters an electrical room of P2 as shown in FIG. 49. As described above, since it is possible to specify at which electrical room the maintenance worker enters, instructions of inspection, operation, and the like to the maintenance worker can be made.

Then, specifying of the position of the radio communication terminal unit 5 and navigation of a root to a measurement device that becomes an inspection object to be specified can be performed by any one of the aforementioned Embodiment 13 to Embodiment 17 and the moving time of the maintenance worker to the position of the measurement device of the measurement unit to be targeted and the searching time of the measurement device of the measurement unit to be targeted can be reduced; and therefore, a reduction of maintenance cost can be achieved.

### Embodiment 19

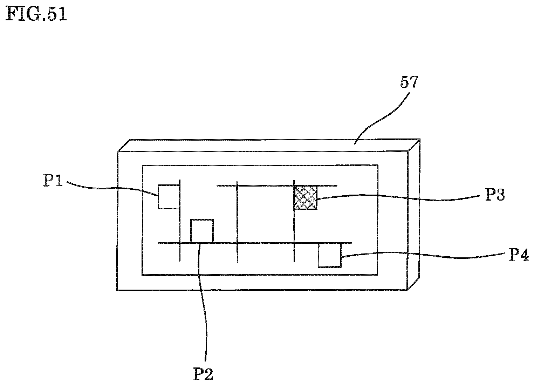

Embodiment 19 of the present invention will be described on the basis of FIG. 50 and FIG. 51. Then, in each of the drawings, identical or equivalent members and portions will be described with the same reference numerals (and letters) assigned thereto. FIG. 50 is a plan view showing a control center in a specific position navigation system according to Embodiment 19 of the present invention. FIG. 51 is a perspective view showing a display device of a management center in the specific position navigation system according to Embodiment 19 of the present invention.

In this Embodiment 19, there is provided a function that specifies at which electrical room a maintenance worker is present, more specifically, at which electrical room the position of a radio communication terminal unit 5 is located. The maintenance worker opens a door 211 of an electrical room 210 and enters therein and performs radio transmission from an ID reader 300 to, for example, a radio communication terminal device 6A by holding an identification (ID) card (not shown in the drawing) over the ID reader 300 provided in the electrical room 210, whereby a position information display panel 57 provided on a management center 56 displays that the maintenance worker enters an electrical room of P3 as shown in FIG. 51. As described above, since it is possible to specify at which electrical room the maintenance worker enters, instructions of inspection, operation, and the like to the maintenance worker can be made.

Then, specifying of the position of the radio communication terminal unit 5 and navigation of a root to a measurement device that becomes an inspection object to be specified can be performed by any one of the aforementioned Embodiment 13 to Embodiment 17 and the moving time of the maintenance worker to the position of the measurement device of the measurement unit to be targeted and the searching time of the measurement device of the measurement unit to be targeted can be reduced; and therefore, a reduction of maintenance cost can be achieved.

### Embodiment 20

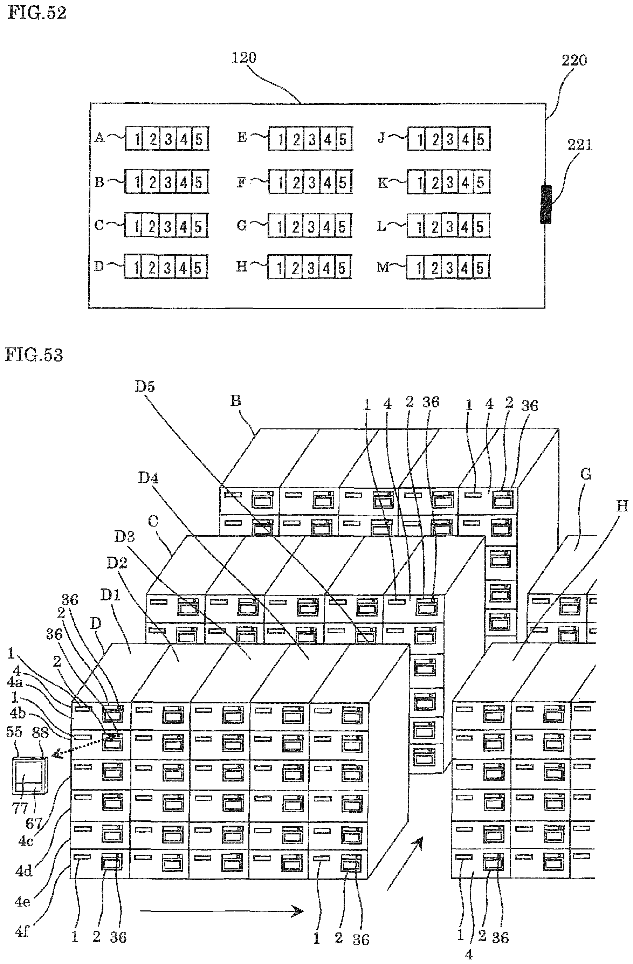

Hereinafter, Embodiment 20 of the present invention will be described on the basis of FIG. 52 to FIG. 59. Then, in each of the drawings, identical or equivalent members and portions will be described with the same reference numerals (and letters) assigned thereto. FIG. 52 is a plan view showing a control center in an information display system for panel equipment according to Embodiment 20 of the present invention. FIG. 53 is a perspective view showing the information display system for panel equipment according to Embodiment 20 of the present invention.

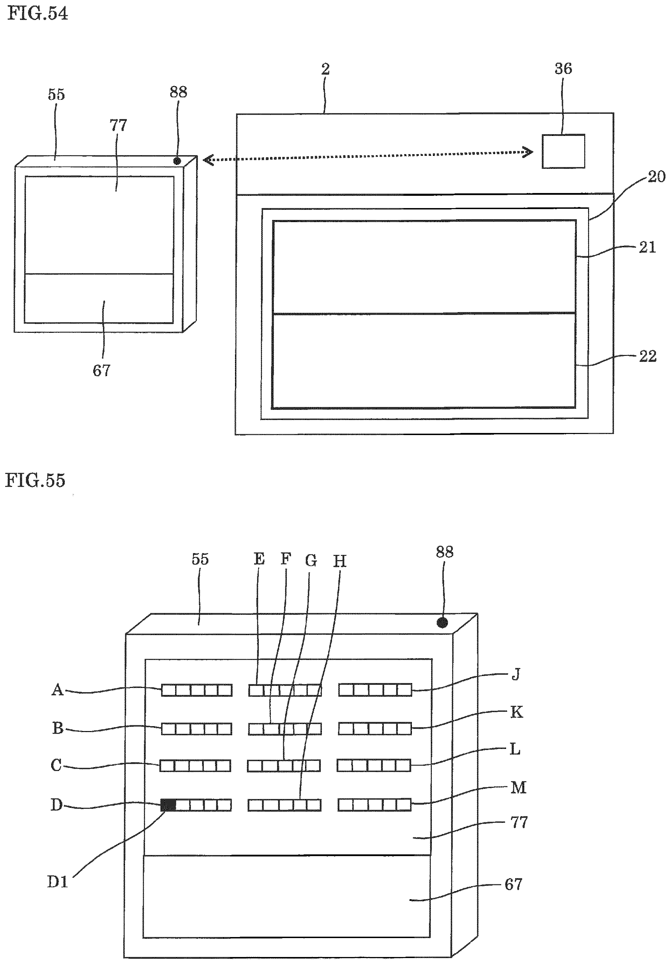

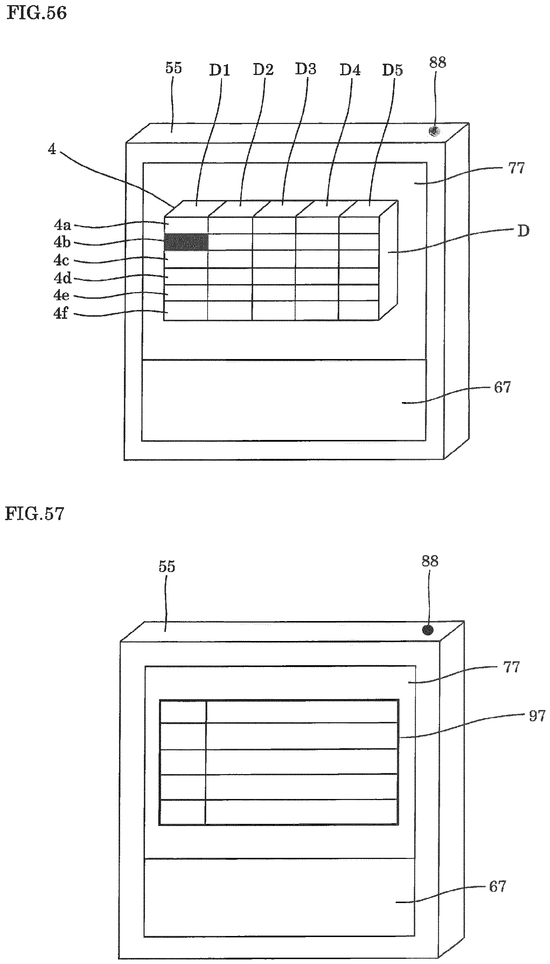

FIG. 54 is a relevant part perspective view showing the information display system for panel equipment according to Embodiment 20 of the present invention. FIG. 55 is a perspective view showing a radio communication terminal unit in the information display system for panel equipment according to Embodiment 20 of the present invention. FIG. 56 is a perspective view showing the radio communication terminal unit in the information display system for panel equipment according to Embodiment 20 of the present invention.

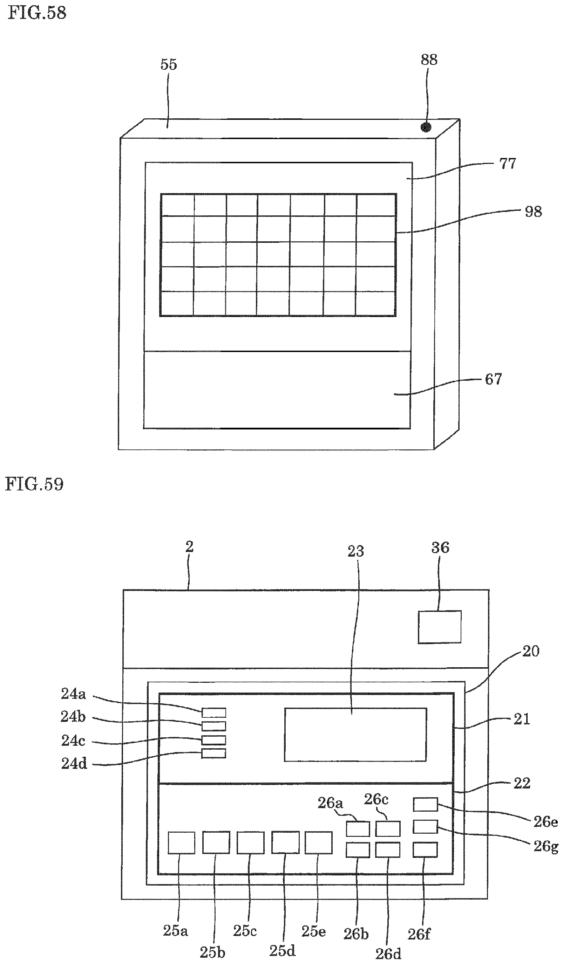

FIG. 57 is a perspective view showing the radio communication terminal unit in the information display system for panel equipment according to Embodiment 20 of the present invention. FIG. 58 is a perspective view showing the radio communication terminal unit in the information display system for panel equipment according to Embodiment 20 of the present invention. FIG. 59 is a front view showing a measurement device in the information display system for panel equipment according to Embodiment 20 of the present invention.

FIG. 52 shows a case where a control center 120 is arranged in an electrical room 220; and FIG. 53 shows the information display system for panel equipment. In the control center 120, for example, six columns of measurement units each constituted by a load nameplate and a measurement device and each having a radio communication block, are arranged and unitized to constitute one panel; and, for example, five rows of the panels are juxtaposed to constitute one row panel and these row panels are arrayed in plurality.

More specifically, by way of an example, the drawing shows the case where row panels from a row panel A to a row panel M are arranged. In the case of inspecting and maintaining the control center 120 arranged in the electrical room 220, the inspection and the maintenance are performed by opening a door 221 and by entering the room.

For example, in the row panel D, six columns of measurement units 4, for example, from a measurement unit 4a to a measurement unit 4f, each constituted by a load nameplate 1 and a measurement device 2 and each having a radio communication block 36, are arranged and unitized to constitute one panel; and, for example, five rows of these panels from a panel D1 to a panel D5, are juxtaposed to constitute one row panel D.

For example, other row panels from the row panel A to the row panel C and from the row panel E to the row panel M, are also similarly configured such that, for example, six columns of the measurement units 4 each constituted by the load nameplate 1 and the measurement device 2 and each having the radio communication block 36, are arranged and unitized to constitute one panel; and, for example, five rows of these panels are juxtaposed to constitute one row panel, respectively.

In the control center 120 in which these row panels from the row panel A to row panel M are arrayed in plurality in the electrical room 220, a maintenance worker confirms every day while going round in sequence that there is no abnormality in a measured value and/or an operation state of each measurement device 2 arranged in each measurement unit 4.

When the maintenance worker confirms that an abnormality occurs in the measured value and/or the operation state of the measurement device 2 arranged in the measurement unit 4, for example, in FIG. 53, in the case where the abnormality occurs in the measurement unit 4b of the second column from the top of the panel D1 of the row panel D, the maintenance worker needs to confirm detail information of the measurement device 2 of the measurement unit 4b to be targeted that the measurement device 2 of the measurement unit 4b to be targeted for the inspection and maintenance is for which and what load (facility).

In this Embodiment 20, the name of the load nameplate 1 of the measurement unit 4b to be targeted is input by a terminal operation block 67 of a radio communication terminal unit 55 and radio communication is performed from a terminal radio communication portion 88 to, for example, the radio communication block 36 provided on, for example, the measurement device 2 of the measurement unit 4b to be targeted by the radio communication terminal unit 55 constituted by, for example, a tablet terminal in which the maintenance worker has.

The name of the load nameplate 1 of the measurement unit 4b to be targeted, which is received by the radio communication from the terminal radio communication portion 88 of the radio communication terminal unit 55 to the radio communication block 36, is transmitted to management database (not shown in the drawing). Then, from the management database, radio communication of the detail information of the measurement unit 4b to be targeted is performed from the radio communication block 36 to the terminal radio communication portion 88 of the radio communication terminal unit 55.

The detail information of the measurement device 2 of the measurement unit 4b to be targeted, which is received by the radio communication from the radio communication block 36 to the terminal radio communication portion 88 of the radio communication terminal unit 55, is displayed on a terminal display block 77 of the radio communication terminal unit 55.

As shown in FIG. 55, row panel arrangement of the control center 120 like the one shown in FIG. 52 is displayed on a display screen to the terminal display block 77 of the radio communication terminal unit 55; and, for example, the panel D1 of the row panel D to be targeted for inspection and maintenance is specified. Then, as shown in FIG. 56, panels from the panel D1 to the panel D5 of the row panel D are displayed and the measurement unit 4b of, for example, the panel D1 to be targeted for inspection and maintenance is specified.

If the measurement unit 4b of the panel D1 is specified, measurement device information 97 of the measurement device 2 of the measurement unit 4b is displayed on the terminal display block 77 of the radio communication terminal unit 55 as shown in FIG. 57. This measurement device information 97 is detail information of measured values, operation states, operation records, trip records, and the like including information in which the measurement device 2 of the measurement unit 4b is for which and what load (facility); and on the basis of the measurement device information 97, a measurement device operation block 22 is operated while watching a measurement device display block 21 of a measurement device display control block 20 of the measurement device 2 and inspection and maintenance are performed.

Furthermore, in the case of watching log information of the past inspection and maintenance, as shown in FIG. 58, measurement device log information 98 of the past inspection and maintenance of the measurement device 2 of the measurement unit 4b is displayed on the terminal display block 77 of the radio communication terminal unit 55, comparison with the past measurement device log information 98 can be easily performed, and it can also be utilized for preventive maintenance.

As described above, according to the information display system for panel equipment of this Embodiment 20, the measurement device information 97 that is detail information of the measurement device 2 of the measurement unit 4 to be targeted or the measurement device log information 98 of the past inspection and maintenance can be confirmed; trouble for referring drawings and/or deficiency in reading comprehension ability of the drawings can be redeemed even the equipment is inspected first; and a burden on the maintenance worker can be reduced. Moreover, the time required for daily inspection work of the maintenance worker can be reduced.

By the way, an example of the measurement device display block 21 and the measurement device operation block 22 of the measurement device display control block 20 of the measurement device 2 will be described on the basis of FIG. 59. The measurement device 2 is provided with, for example, the radio communication block 36. The measurement device display block 21 of the measurement device display control block 20 is provided with a liquid crystal display 23 that displays a wide variety of numerical values and LED indication lamps from an LED indication lamp 24a to an LED indication lamp 24d. For example, the LED indication lamp 24a displays ON; the LED indication lamp 24b, OFF; the LED indication lamp 24c, FAULT; and the LED indication lamp 24d, ERROR, respectively.

Furthermore, the measurement device operation block 22 of the measurement device display control block 20 is provided with, for example, a direct control button block 25a, a remote control button 25b, a stop button 25c, a reverse rotation button 25d, a normal rotation button 25e, a MODE button 26a, a SET button 26b, an up button 26c, a down button 26d, a CLEAR/BACK button 26e, a RESET button 26f, and an external apparatus connection terminal 26g.

Therefore, when confirmation is made while going round in sequence that there is no abnormality in the measured value and/or the operation state of each measurement device 2 arranged in each measurement unit 4 of a plurality of arrayed row panels from the row panel A to the row panel M in the control center 120, for example, it is quite obvious that the LED indication lamp 24d is lighted and ERROR is displayed and the maintenance worker goes near the measurement device 2 of the measurement unit 4 in which the LED indication lamp 24d is lighted.

Then, as described above, radio communication is performed from the terminal radio communication portion 88 of the radio communication terminal unit 55 to the radio communication block 36 provided on the measurement device 2 of the measurement unit 4b in which the LED indication lamp 24d is lighted; and whereby, from the management database, radio communication of the detail information of the measurement device 2 of the measurement unit 4b in which the LED indication lamp 24d is lighted is performed from the radio communication block 36 to the terminal radio communication portion 88 of the radio communication terminal unit 55 and the detail information of the measurement device 2 of the measurement unit 4b in which the LED indication lamp 24d is lighted can be displayed on the terminal display block 77 of the radio communication terminal unit 55.

Then, inspection and maintenance can be performed by operating the direct control button block 25a, the remote control button 25b, the stop button 25c, the reverse rotation button 25d, the normal rotation button 25e, the MODE button 26a, the SET button 26b, the up button 26c, the down button 26d, the CLEAR/BACK button 26e, the RESET button 26f, the external apparatus connection terminal 26g, and the like which are provided on the measurement device operation block 22 of the measurement device display control block 20.

### Embodiment 21

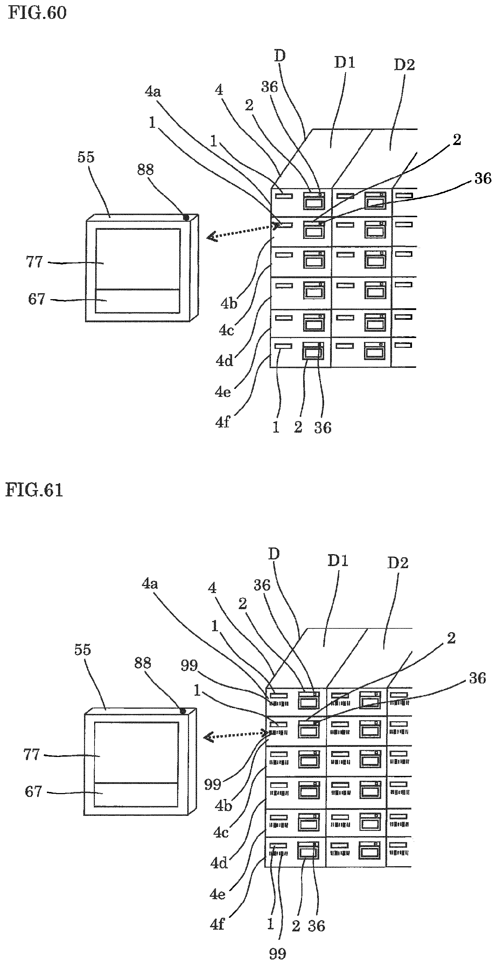

Embodiment 21 of the present invention will be described on the basis of FIG. 60. FIG. 60 is a relevant part perspective view showing an information display system for panel equipment according to Embodiment 21 of the present invention.

In the aforementioned Embodiment 20, there has been described the case where the name of the load nameplate 1 of the measurement unit 4b to be targeted is input by the terminal operation block 67 of the radio communication terminal unit 55 and radio communication is performed from the terminal radio communication portion 88 to, for example, the radio communication block 36 provided on, for example, the measurement device 2 of the measurement unit 4b to be targeted.

However, in this Embodiment 21, a load nameplate 1 of a measurement unit 4b to be targeted is imaged by an imaging device (not shown in the drawing) such as a camera provided on a radio communication terminal unit 55 and radio communication of the imaging data is performed from a terminal radio communication portion 88 to a radio communication block 36 provided on, for example, a measurement device 2 of the measurement unit 4b to be targeted.

A character of the load nameplate 1 is not limited to Japanese, but any national language may be used. A specific size and font may be used and/or a non-specified size and font may be used for the size of the character and font.

A character, a code, and an RF tag may also be used for the load nameplate 1.

Furthermore, an attachment position may be permissible even on the face of a panel, the measurement device 2, and/or any place.

The imaging data of the load nameplate 1 of the measurement unit 4b to be targeted, the imaging data being received by the radio communication from the terminal radio communication portion 88 of the radio communication terminal unit 55 to the radio communication block 36, is transmitted to management database (not shown in the drawing) and image analysis is performed. Then, from the management database, radio communication of detail information of the measurement device 2 of the measurement unit 4b to be targeted is performed from the radio communication block 36 to the terminal radio communication portion 88 of the radio communication terminal unit 55; and the detail information of the measurement device 2 of the measurement unit 4b to be targeted, the detail information being received by the radio communication from the radio communication block 36 to the terminal radio communication portion 88 of the radio communication terminal unit 55, is displayed on a terminal display block 77 of the radio communication terminal unit 55.

As a modified example of Embodiment 21, if the name of the load nameplate 1 is made so as to be able to store in the inside of the measurement device 2 as data, the load nameplate is not needed.

According to this Embodiment 21, it is only required that the load nameplate 1 of the measurement unit 4b to be targeted is imaged by the imaging device (not shown in the drawing) such as the camera provided on the radio communication terminal unit 55 and radio communication of the imaging data is performed; and the name of the load nameplate 1 does not need to be input as described in the aforementioned Embodiment 20 and radio communication can be easily performed.

### Embodiment 22

Embodiment 22 of the present invention will be described on the basis of FIG. 61. FIG. 61 is a relevant part perspective view showing an information display system for panel equipment according to Embodiment 22 of the present invention.

In the aforementioned Embodiment 21, there has been described the case where the load nameplate 1 of the measurement unit 4b to be targeted is imaged by the imaging device (not shown in the drawing) such as the camera provided on the radio communication terminal unit 55 and radio communication of the imaging data is performed from the terminal radio communication portion 88 to the radio communication block 36 provided on, for example, the measurement device 2 of the measurement unit 4b to be targeted.

However, in this Embodiment 22, an information code 99 (any code such as a bar code, a two-dimensional code, and a three-dimensional code may be used if the code can discriminate information) which specifies a load nameplate 1 is provided, the information code 99 of a measurement unit 4b to be targeted is imaged by an imaging device (not shown in the drawing) such as a camera provided on a radio communication terminal unit 55 and radio communication of the imaging data is performed from a terminal radio communication portion 88 to a radio communication block 36 provided on, for example, a measurement device 2 of a measurement unit 4b to be targeted.

The imaging data of the information code 99 of the measurement unit 4b to be targeted, the imaging data being received by the radio communication from the terminal radio communication portion 88 of the radio communication terminal unit 55 to the radio communication block 36, is transmitted to management database (not shown in the drawing) and image analysis is performed.

Then, from the management database, radio communication of detail information of the measurement device 2 of the measurement unit 4b to be targeted is performed from the radio communication block 36 to the terminal radio communication portion 88 of the radio communication terminal unit 55; and the detail information of the measurement device 2 of the measurement unit 4b to be targeted, the detail information being received by the radio communication from the radio communication block 36 to the terminal radio communication portion 88 of the radio communication terminal unit 55, is displayed on a terminal display block 77 of the radio communication terminal unit 55.

According to this Embodiment 22, it is only required that the information code 99 of the measurement unit 4b to be targeted is imaged by the imaging device (not shown in the drawing) such as the camera provided on the radio communication terminal unit 55 and radio communication of the imaging data is performed; and the same effects as the aforementioned Embodiment 21 can be exhibited.

### Embodiment 23

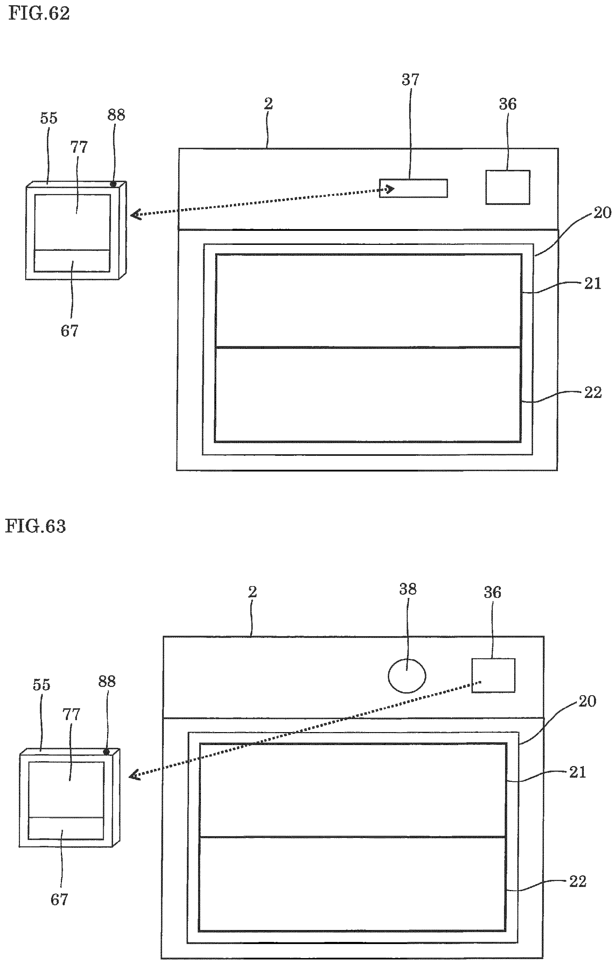

Embodiment 23 of the present invention will be described on the basis of FIG. 62. FIG. 62 is a front view showing an information display system for panel equipment according to Embodiment 23 of the present invention.

In this Embodiment 23, an RF tag 37 (it may be permissible if a memory is built-in and non-contact reading and writing or only reading is possible) which specifies each measurement device 2 on each measurement device 2 of each measurement unit 4, is provided, the RF tag 37 of the measurement device 2 of the measurement unit 4b to be targeted is read by a radio communication terminal unit 55, and radio communication of the read RF tag 37 is performed from a terminal radio communication portion 88 to a radio communication block 36 provided on the measurement device 2 of the measurement unit 4b to be targeted.

The RF tag 37 of the measurement device 2 of the measurement unit 4b to be targeted, the RF tag 37 being received by the radio communication from the terminal radio communication portion 88 of the radio communication terminal unit 55 to the radio communication block 36, is transmitted to management database (not shown in the drawing) and analysis is performed. Then, from the management database, radio communication of detail information of the measurement device 2 of the measurement unit 4b to be targeted is performed from the radio communication block 36 to the terminal radio communication portion 88 of the radio communication terminal unit 55; and the detail information of the measurement device 2 of the measurement unit 4b to be targeted, the detail information being received by the radio communication from the radio communication block 36 to the terminal radio communication portion 88 of the radio communication terminal unit 55, is displayed on a terminal display block 77 of the radio communication terminal unit 55.

According to this Embodiment 23, it is only required that the RF tag 37 of the measurement device 2 of the measurement unit 4b to be targeted is read by the radio communication terminal unit 5 and radio communication of the RF tag 37 is performed; and the same effects as the aforementioned Embodiment 22 can be exhibited.

### Embodiment 24

Embodiment 24 of the present invention will be described on the basis of FIG. 63. FIG. 63 is a front view showing an information display system for panel equipment according to Embodiment 24 of the present invention.

In this Embodiment 24, an operation button 38 is provided on each measurement device 2 of each measurement unit 4. Radio communication of information of the measurement device 2 of the measurement unit 4 to be targeted is performed from a radio communication block 36 of the measurement device 2 of the measurement unit 4 to be targeted to a terminal radio communication portion 88 of a radio communication terminal unit 55 by outputting a command by pressing the operation button 38 of the measurement device 2 of the measurement unit 4 to be targeted and the information is displayed on a terminal display block 77 of the radio communication terminal unit 55.

According to this Embodiment 24, the information of the measurement device 2 of the measurement unit 4 to be targeted can be displayed on the terminal display block 77 of the radio communication terminal unit 55 by outputting the command by pressing the operation button 38 of the measurement device 2 of the measurement unit 4b to be targeted. Therefore, the time required for daily inspection work of a maintenance worker can be reduced; detail information of the measurement device can be confirmed even the equipment is inspected first; trouble for referring drawings and/or deficiency in reading comprehension ability of the drawings can be redeemed; and a burden on the maintenance worker can be reduced.

The display control systems of the respective embodiments can be applied to the control center.

### Industrial Applicability

The present invention is suitable for actualizing a display control system that can perform inspection and maintenance of a measurement device of a measurement unit to be targeted.

Furthermore, the present invention is suitable for actualizing a specific position navigation system that can navigate a route to a measurement device of a measurement unit to be targeted.

Moreover, the present invention is suitable for actualizing an information display system for panel equipment which can confirm detail information of a measurement device of a measurement unit to be targeted.

### Description of Reference Numerals

- 1: Load nameplate
- 2: Measurement device
- 3: Radio communication block
- 4: Measurement unit
- 5: Radio communication terminal unit
- 6: Terminal operation block
- 7: Terminal display block
- 8: Terminal radio communication portion
- 11: Bar code
- 12: Two-dimensional code
- 30: Measurement device
- 31: Measurement device
- 35: Radio frequency (RF) code
- 37: RF tag
- 38: Operation button
- 40: Measurement unit
- 50: Display control unit
- 52: Display unit
- 53: Control unit
- 55: Radio communication terminal unit
- 60: Display control unit
- 61: Radio communication unit
- 65: Display control unit
- 66: Radio communication unit
- 67: Terminal operation block
- 70: Monitoring control unit
- 71: Terminal display block
- 72: Terminal operation block
- 77: Terminal display block
- 80: Radio communication unit
- 88: Terminal radio communication portion
- 90: Display control unit
- 91: Wired communication unit
- 92: Network circuit
- 95: Display control unit
- 96: Radio communication unit
- 97: Measurement device information
- 98: Measurement device log information
- 99: Information code
- 210: Electrical room
- 300: ID reader

## Claims

1. A display control system comprising:
- a plurality of arrayed row panels (A-M) of a control center (100), each row panel comprising juxtaposed panels, each panel comprising a plurality of columns, each column comprising a measurement unit (40), wherein each measurement unit (40) comprises a measurement device (30) on which a measurement device display unit is not mounted,
- wherein each of the row panels (A-M) comprises a display control unit (50) which is provided on one of the measurement units (40) of the row panels (A-M),
- wherein, for each of the row panels (A-M), the display control unit (50) is connected through a line by a wired circuit network (51) to each of the measurement units (40), and
- the display control unit (50) comprises a display unit (52) adapted to display the array of row panels (A-M) of the control center (100), and is further adapted to display each operation state of the measurement units (40) of a row panel (A-M), and
- a control unit (53) adapted to execute a control command and adapted to send the control command to each of the measurement units (40) of the row panel (A-M).

2. The display control system according to claim 1, wherein
- the display control unit (50) is configured to execute collection of each operation state and each control command of the measurement units (40), wherein the display control system further comprises:
- a radio communication unit (61) mounted on the display control unit (50); and
- a monitoring control unit (70) which performs radio communication with the radio communication unit (61), has a terminal display block (71) that displays each operation state of the respective measurement units (40) and a terminal operation block (72) that executes and sends the control command to each of the respective measurement units (40), and executes confirmation of each operation state and each control command of the measurement units (40).

3. The display control system according to claim 1, wherein
- the display control unit (50) is configured to execute collection of each operation state and each control command of the measurement units (40), wherein the display control system further comprises:
- a wired communication unit (91) mounted on the display control unit (50);
- a network circuit (92) connected through a line by the wired circuit network (51) to the wired communication unit (91); and a monitoring control unit (70) which performs radio communication with the network circuit (92), has a terminal display block (71) that displays each operation state of the respective measurement units (40) and a terminal operation block (72) that executes and sends the control command to each of the respective measurement units (40), and executes confirmation of each operation state and each control command of the measurement units (40).

4. The display control system according to any one of claims 1 to 3,
wherein said measurement device (30) of the measurement unit (40) is not mounted with a measurement device control unit.

5. The display control system according to any one of claims 1 to 3,
wherein said measurement device (30) of the measurement unit (40) is mounted with a measurement device control unit.

6. The display control system according to any one of claims 1 to 5,
wherein said display control unit (50) is constituted by a programmable logic controller.

7. A control center that comprises the display control system as set forth in any one of claim 1 to claim 6.

## Patentansprüche

1. Anzeigesteuerungssystem, das Folgendes aufweist:
- eine Vielzahl von angeordneten Reihenfeldern (A-M) einer Steuerzentrale (100), wobei jedes Reihenfeld nebeneinanderliegende Felder aufweist, wobei jedes Feld eine Vielzahl von Spalten aufweist, wobei jede Spalte eine Messeinheit (40) aufweist, wobei jede Messeinheit (40) eine Messvorrichtung (30) aufweist, an der keine Messvorrichtungs-Anzeigeeinheit angebracht ist,
- wobei jedes der Reihenfelder (A-M) eine Anzeigesteuereinheit (50) aufweist, die an einer der Messeinheiten (40) der Reihenfelder (A-M) angeordnet ist,
- wobei, für jedes der Reihenfelder (A-M), die Anzeigesteuereinheit (50) durch eine Leitung über ein kabelgebundenes Schaltungsnetzwerk (51) mit jeder der jeweiligen Messeinheiten (40) verbunden ist, und
- wobei die Anzeigesteuereinheit (50) eine Anzeigeeinheit (52) aufweist, die dazu ausgelegt ist, die Anordnung der Reihenfelder (A-M) der Steuerzentrale (100) anzuzeigen, und ferner dazu ausgelegt ist, den jeweiligen Betriebszustand der Messeinheiten (40) eines Reihenfelds (A-M) anzuzeigen, und
- eine Steuereinheit (53), die dazu ausgelegt ist, einen Steuerbefehl auszuführen, und dazu ausgelegt ist, den Steuerbefehl an die jeweilige Messeinheit (40) des Reihenfelds (A-M) zu senden.

2. Anzeigesteuerungssystem nach Anspruch 1,
wobei die Anzeigesteuereinheit (50) dazu konfiguriert ist, eine Sammlung jedes Betriebszustands und jedes Steuerbefehls der Messeinheiten (40) auszuführen,
wobei das Anzeigesteuerungssystem ferner Folgendes aufweist:
- eine Funkkommunikationseinheit (61), die an der Anzeigesteuereinheit (50) angebracht ist; und
- eine Überwachungssteuereinheit (70), die eine Funkkommunikation mit der Funkkommunikationseinheit (61) durchführt, einen Terminal-Anzeigeblock (71) aufweist, der den jeweiligen Betriebszustand der jeweiligen Messeinheiten (40) anzeigt, und einen Terminal-Betriebsblock (72) aufweist, der den Steuerbefehl ausführt und an jede der Messeinheiten (40) sendet, und eine Bestätigung jedes Betriebszustands und jedes Steuerbefehls der Messeinheiten (40) durchführt.

3. Anzeigesteuerungssystem nach Anspruch 1,
wobei die Anzeigesteuereinheit (50) dazu konfiguriert ist, eine Sammlung jedes Betriebszustands und jedes Steuerbefehls der Messeinheiten (40) auszuführen,
wobei das Anzeigesteuerungssystem ferner Folgendes aufweist:
- eine kabelgebundene Kommunikationseinheit (91), die an der Anzeigesteuereinheit (50) angebracht ist;
- eine Netzwerkschaltung (92), die durch eine Leitung über das kabelgebundene Schaltungsnetzwerk (51) mit der kabelgebundenen Kommunikationseinheit (91) verbunden ist; und
- eine Überwachungssteuereinheit (70), die eine Funkkommunikation mit der Netzwerkschaltung (92) durchführt, einen Terminal-Anzeigeblock (71) aufweist, der den jeweiligen Betriebszustand der jeweiligen Messeinheiten (40) anzeigt, und einen Terminal-Betriebsblock (72) aufweist, der den Steuerbefehl ausführt und an jede der jeweiligen Messeinheiten (40) sendet, und eine Bestätigung jedes Betriebszustands und jedes Steuerbefehls der Messeinheiten (40) durchführt.

4. Anzeigesteuerungssystem nach einem der Ansprüche 1 bis 3,
wobei die Messvorrichtung (30) der Messeinheit (40) nicht an einer Messvorrichtungs-Steuereinheit angebracht ist.

5. Anzeigesteuerungssystem nach einem der Ansprüche 1 bis 3,
wobei die Messvorrichtung (30) der Messeinheit (40) an einer Messvorrichtungs-Steuereinheit angebracht ist.

6. Anzeigesteuerungssystem nach einem der Ansprüche 1 bis 5,
wobei die Anzeigesteuereinheit (50) von einer speicherprogrammierbaren Steuerung gebildet ist.

7. Steuerzentrale, die ein Anzeigesteuerungssystem nach einem der Ansprüche 1 bis 6 aufweist.

## Revendications

1. Système de commande d'affichage, comprenant :
- une pluralité de panneaux de rangée disposés en réseau (A-M) d'un centre de commande (100), chaque panneau de rangée comprenant des panneaux juxtaposés, chaque panneau comprenant une pluralité de colonnes, chaque colonne comprenant une unité de mesure (40), dans lequel chaque unité de mesure (40) comprend un dispositif de mesure (30) sur lequel une unité d'affichage de dispositif de mesure n'est pas montée,
- dans lequel chacun des panneaux de rangée (A-M) comprend une unité de commande d'affichage (50) qui est prévue sur l'une des unités de mesure (40) des panneaux de rangée (A-M),
- dans lequel, pour chacun des panneaux de rangée (A-M), l'unité de commande d'affichage (50) est connectée au moyen d'une ligne par un réseau de circuits câblés (51) à chacune des unités de mesure (40) et
- l'unité de commande d'affichage (50) comprend une unité d'affichage (52) adaptée à afficher le réseau de panneaux de rangée (A-M) du centre de commande (100) et est en outre adaptée à afficher chaque état de fonctionnement des unités de mesure (40) d'un panneau de rangée (A-M), et
- une unité de commande (53) adaptée à exécuter une instruction de commande et adaptée à envoyer l'instruction de commande à chacune des unités de mesure (40) du panneau de rangée (A-M).

2. Système de commande d'affichage selon la revendication 1, dans lequel
- l'unité de commande d'affichage (50) est configurée pour exécuter la collecte de chaque état de fonctionnement et de chaque instruction de commande des unités de mesure (40), dans lequel le système de commande d'affichage comprend en outre :
- une unité de communication radio (61) montée sur l'unité de commande d'affichage (50) ; et
- une unité de commande de surveillance (70) qui effectue une communication radio avec l'unité de communication radio (61), présente un bloc d'affichage de terminal (71) qui affiche chaque état de fonctionnement des unités de mesure respectives (40) ainsi qu'un bloc de fonctionnement de terminal (72) qui exécute et envoie l'instruction de commande à chacune des unités de mesure respectives (40) et exécute la confirmation de chaque état de fonctionnement et de chaque instruction de commande des unités de mesure (40).

3. Système de commande d'affichage selon la revendication 1, dans lequel
- l'unité de commande d'affichage (50) est configurée pour exécuter la collecte de chaque état de fonctionnement et de chaque instruction de commande des unités de mesure (40), dans lequel le système de commande d'affichage comprend en outre :
- une unité de communication câblée (91) montée sur l'unité de commande d'affichage (50) ;
- un circuit de réseau (92) connecté au moyen d'une ligne par le réseau de circuits câblés (51) à l'unité de communication câblée (91) ; et
une unité de commande de surveillance (70) qui effectue une communication radio avec le circuit de réseau (92), présente un bloc d'affichage de terminal (71) qui affiche chaque état de fonctionnement des unités de mesure respectives (40) ainsi qu'un bloc de fonctionnement de terminal (72) qui exécute et envoie l'instruction de commande à chacune des unités de mesure respectives (40), et exécute la confirmation de chaque état de fonctionnement et de chaque instruction de commande des unités de mesure (40).

4. Système de commande d'affichage
selon l'une quelconque des revendications 1 à 3,
dans lequel ledit dispositif de mesure (30) de l'unité de mesure (40) n'est pas monté avec une unité de commande de dispositif de mesure.

5. Système de commande d'affichage
selon l'une quelconque des revendications 1 à 3,
dans lequel ledit dispositif de mesure (30) de l'unité de mesure (40) est monté avec une unité de commande de dispositif de mesure.

6. Système de commande d'affichage
selon l'une quelconque des revendications 1 à 5,
dans lequel ladite unité de commande d'affichage (50) est constituée par un contrôleur logique programmable.

7. Centre de commande qui comprend le système de commande d'affichage selon l'une quelconque des revendications 1 à 6.
